# EUROPEAN PATENT APPLICATION

(11) **EP 1 669 420 A1**
(43) Date of publication of application: **14.06.2006**
(21) Application number: 04791988.1
(22) Date of filing: 01.10.2004
(51) Int. Cl.: C09D 11/00, B41J 2/01, B41M 5/00

(54) **RECORDING FLUID, LIQUID CARTRIDGE, LIQUID EJECTOR, AND METHOD OF EJECTING LIQUID**

(30) Priority: 02.10.2003 JP 2003344970
(71) Applicant: SONY CORPORATION, Tokyo 141-0001 (JP)
(72) Inventor: FUKUDA, Toshio, SONY CORPORATION, Shinagawa-ku, Tokyo 1410001 (JP)
(74) Representative: Müller, Frithjof E.
(86) International application number: PCT/JP2004/014521
(87) International publication number: WO 2005/033222

(57) **Abstract**

Disclosed is a recording liquid which is deposited as a liquid droplet on a recording paper sheet P. A surfactant containing an organic compound having the following chemical formula 1: 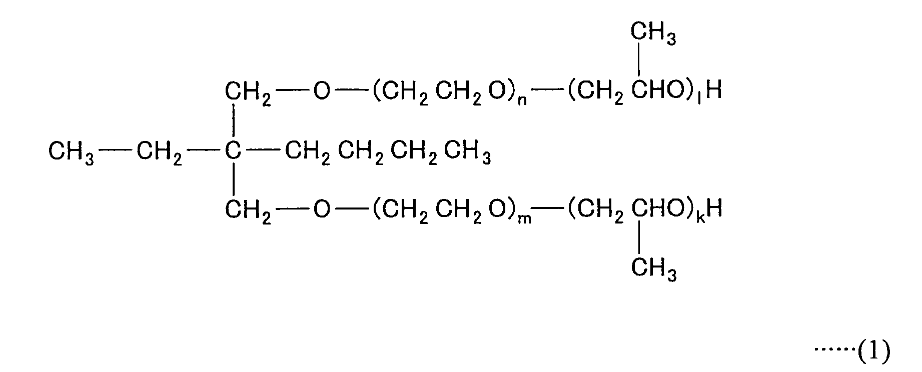 where k+1= 1 ~ 10 and m+n = 2 ~ 30 is contained in an ink to prevent a point of deposition of the ink liquid droplet from becoming bled or blurred.

## Description

### Technical Field

This invention relates to a recording liquid, deposited on a support in the form of liquid droplets for performing recording thereon, and a liquid cartridge in which the recording liquid is accommodated. This invention also relates to liquid emitting methods and apparatus for emitting a liquid, accommodated in this liquid cartridge and pressurized by the pressure generated by a pressure generating device, onto a support via emitting port in the form of liquid droplets.

The present application contains subject matter related to Japanese Patent Application JP-2003-344970 filed in the Japanese Patent Office on October 2, 2003, the entire contents of which being incorporated herein by reference.

### Background Art

As an apparatus for emitting the liquid, there has so far been known a printer apparatus of the ink jet system in which the ink is emitted via head chip onto a recording paper sheet, as a support, for recording an image or letters/ characters thereon. The printer apparatus, employing this ink jet system, has merits that it is low in running costs and small-sized and lends itself to printing an image as a color image. In the printing apparatus of the ink jet system, inks of plural colors, exemplified by yellow, magenta, cyan and black, are supplied from ink cartridges, containing the inks of these various colors, into e.g. ink liquid chambers of a head chip.

With this printer apparatus, the inks supplied to for example the ink liquid chambers are pressurized by pressure generating devices, such as heating resistors, arranged in the ink liquid chambers, so as to be emitted via small-sized ink emitting ports, that is, so-called nozzles, provided in the head chip. Specifically, the inks in the ink chambers are heated by heating resistors, provided within the ink liquid chambers, to generate air bubbles in the inks on the heating resistors. The inks are emitted from the nozzles under the pressure generated in the ink liquid chambers by the air bubbles, with the so emitted inks being deposited on for example a recording paper sheet, as a support, for printing an image or letters/ characters thereon.

For the ink used for the above-described printer apparatus of the ink jet system, a solution composed of a coloring agent, such as a variety of dyes or pigments, as dyestuff, dispersed in for example an organic solvent, is used. It is required of the ink that it is of high image quality such that it is not bled when deposited on for example a recording paper sheet, and that is not deteriorated in quality when stored for long, such that it has long shelf life. It is also required that its color is not changed by light, heat or moisture after deposition on a recording paper sheet, that is, it has high color-fastness, that the ink is emitted from a nozzle in keeping with the printing speed of the printer apparatus, and that the ink dries promptly following the printing, that is, it has quick drying properties. It is furthermore required that the ink does not stop up the nozzle during printing or on the occasion of re-start of printing following interruption of printing. A variety of proposals which satisfy these requests have so far been made in Japanese Laid-Open Patent Publications S59-93765, S60-243175, S56-149475, S56-163168, S56-5781, S63-139964, S53-61412 and S62-116676.

It has however long been felt to be difficult to develop the ink which lends itself to increasing the printing speed of the printer apparatus, that is, to shortening the time interval of consecutive ink emission from the nozzle. Specifically, the viscosity of the ink needs to be lowered with increase in the printing speed of the printer apparatus, however, if the viscosity of the ink is lowered in this way, there is raised a problem that ink emission from the nozzle is destabilized.

In printing with a printer apparatus, plain paper sheets, such as copy paper sheets, bond paper sheets or report paper sheets, are mainly used as recording paper sheets for suppressing the printing cost. In such case, there is a fear that problems may be raised such that the deposited ink is bled along the fiber of the plain paper sheet, or is delayed in drying depending on for example the type of the sizing agent contained in the plain paper sheets.

For solving such problems, it is proposed in Japanese Laid-Open Patent Publications S-56-57862 and S-55-29546 to set the pH of the ink to high alkalinity or to use larger quantities of surfactants.

However, in case a strongly alkaline ink is used, the ink applied to the plain paper sheet also becomes strongly alkaline, which means that objects that may come in touch with the ink may be altered in physical properties.

With the use of larger quantities of surfactants, there is a fear that severe bleeding may occur depending on the types of the plain paper sheet used. Moreover, in this case, the ink tends to be excessively receded from the nozzle opening surface towards the ink liquid chamber or to leak outward beyond the nozzle opening surface to render it difficult to control the degree of wetting of the nozzle by the ink or to emit the ink from the nozzle. In addition, the cloud point of the surfactant commonly used is approximately 60°C. However, this cloud point may be exceeded as a result of heating of a heating resistor in case of emitting the ink from the nozzle. If the ink is heated beyond the cloud point of the surfactant, the surfactant may be precipitated into the ink to alter its physical properties. In such case, printing to a high image quality cannot be achieved, or it becomes impossible to cope with the shortened ink emission time intervals.

### Disclosure of the Invention

### Problems to be solved by the Invention

It is an object of the present invention to provide a recording liquid superior in wetting properties for a support and susceptible only to limited foaming or bleeding, and which will assure printing to high image quality as the shortened emission interval is coped with. The present invention also contemplates to provide a liquid cartridge for accommodating the recording liquid and methods and apparatus capable of printing to high image quality using the recording liquid contained in this liquid cartridge.
According to the present invention, there is provided, for achieving the above object, a recording liquid deposited on a support as liquid droplets for performing recording thereon, wherein the recording liquid contains a dyestuff, a solvent for dispersing the dyestuff and a surfactant containing an organic compound represented by the chemical formula (1): 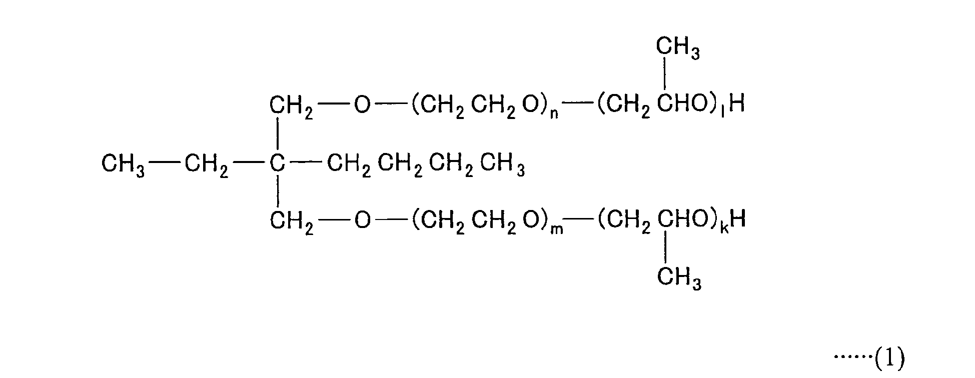 where k+1 = 1 ~ 10 and m+n = 2 ~ 30.

According to the present invention, there is also provided a liquid cartridge mounted to a liquid supplying device provided to a liquid emitting apparatus which is configured for emitting a recording liquid contained in a liquid vessel in the form of liquid droplets for depositing the so emitted liquid droplets on a support to effect the recording. The liquid cartridge operates as a supply source for the recording liquid for the liquid supplying device. The recording liquid contains a dyestuff, a solvent for dispersing the dyestuff and an organic compound represented by the chemical formula (1): 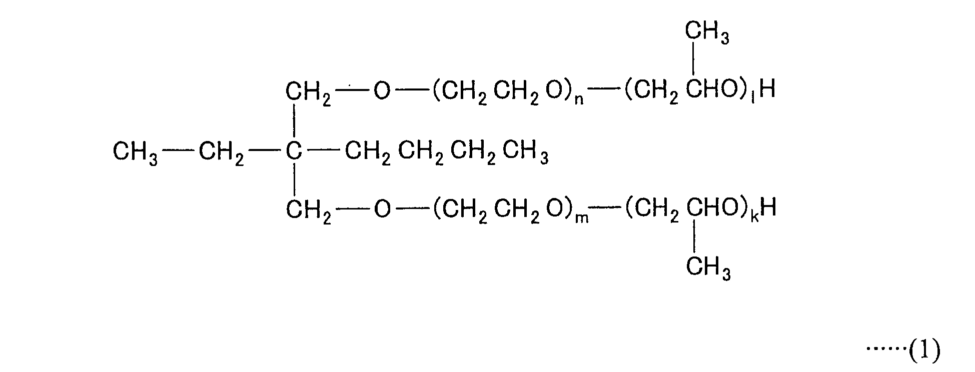 where k+1= 1 ∼ 10 and m+n = 2 ~ 30.

According to the present invention, there is also provided a liquid emitting apparatus comprising emitting means including a liquid chamber for storage of a recording liquid therein, a supply unit for supplying the recording liquid to the liquid chamber, at least one pressure generating device provided in the liquid chamber for pressurizing the recording liquid stored in the liquid chamber, and an emitting port for emitting the recording liquid, pressurized by the pressure generating devices, onto the major surface of a support, from the liquid chamber, in the form of liquid droplets, and a liquid cartridge connected to the emitting means and operating as a supply source of the recording liquid to the supply unit. The recording liquid contains a dyestuff, a solvent for dispersing the dyestuff and a surfactant containing an organic compound represented by the chemical formula (1): 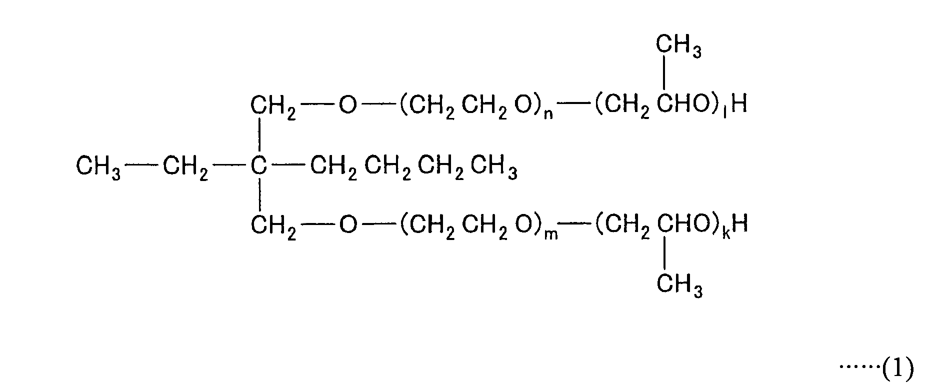 where k+1= 1 ~ 10 and m+n = 2 ~ 30.

According to the present invention, there is also provided a method for emitting a liquid by a liquid emitting apparatus comprising emitting means including a liquid chamber for storage of a recording liquid therein, a supply unit for supplying the recording liquid to the liquid chamber, at least one pressure generating device provided in the liquid chamber for pressurizing the recording liquid stored in the liquid chamber, and an emitting port for emitting the recording liquid, pressurized by the pressure generating device, onto the major surface of a support, from the liquid chamber, in the form of liquid droplets, and a liquid cartridge connected to the emitting means and operating as a supply source of the recording liquid to the supply unit. The method comprises employing, as the recording liquid, a liquid mixture composed of a dyestuff, a solvent for dispersing the dyestuff, and a surfactant containing an organic compound represented by the chemical formula 1: 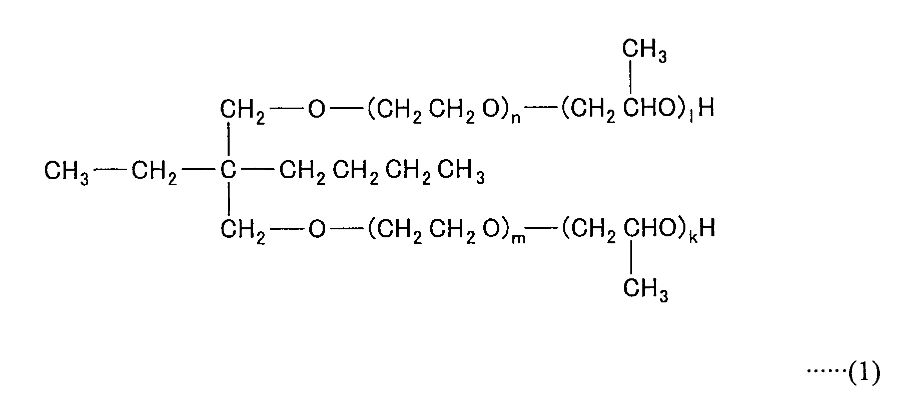 where k+1 = 1 ~ 10 and m+n = 2 ~ 30.

According to the present invention, in which a surfactant containing at least an organic compound represented by the chemical formula (1) is contained in the recording liquid, it is possible to suppress the foaming of the recording liquid in the liquid chamber and to provide for optimum wettability of the recording liquid for the support. Thus, according to the present invention, in which the foaming of the recording liquid in the liquid chamber in the emitting means may be suppressed to provide for optimum wettability of the recording liquid for e.g. a port for emission, the recording liquid can be emitted satisfactorily from the emitting port. Moreover, according to the present invention, in which the cloud point of the surfactant containing at least an organic compound represented by the chemical formula (1) is approximately 80°C which is higher than that of the conventional surfactant, it is possible to prevent the temperature of the recording liquid on the pressure generating device from exceeding the cloud point of the surfactant when the recording liquid is emitted via emission port.

That is, according to the present invention, in which a surfactant containing at least the organic compound represented by the chemical formula (1): 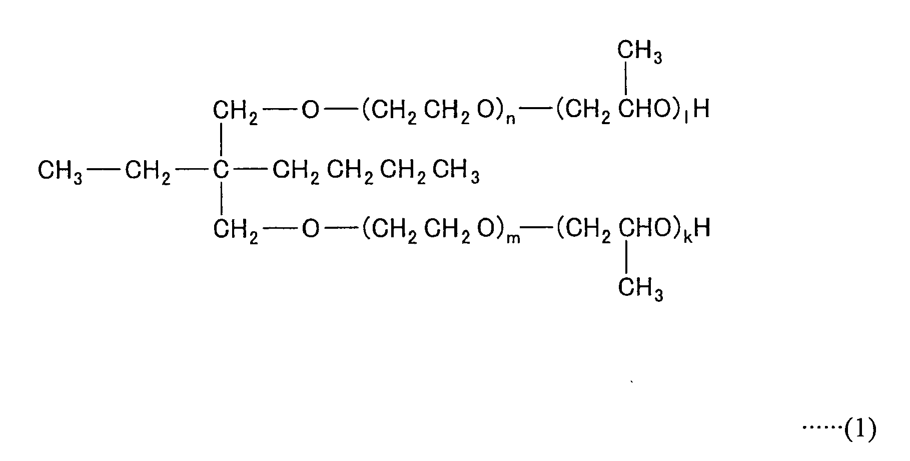 where k+1 = 1 ~ 10 and m+n = 2 ~ 30, is contained in the recording liquid, the recording liquid in the liquid chamber is prevented from foaming, whilst the recording liquid may be of optimum wettability with respect to the support. Hence, when a recording paper sheet is used as a support, the recording liquid, deposited on the recording paper sheet, may be prohibited from becoming bled or blurred, thus achieving printing to high image quality.

According to the present invention, in which the cloud point of the surfactant contained in the recording liquid is higher than heretofore, there is no risk that, when the recording liquid is emitted from the emitting port, the temperature of the recording liquid on the pressure generating device readily exceeds the cloud point of the surfactant to deteriorate the properties of the recording liquid. Hence, with the present invention, it is possible to avoid the inconvenience that liquid droplets from the emitting port become unable to be emitted via emitting ports due to deteriorated characteristics of the recording liquid.

According to the present invention, in which excessive foaming of the recording liquid in the liquid chamber may be prohibited and wettability of the recording liquid for the emitting port may be optimized, the recording liquid may be optimally emitted in the state of liquid droplets from the emitting port.

According to the present invention, the recorded liquid is not excessively foamed in the recording chamber, even though the emission interval of the recording liquid via emitting port is shortened. In addition, the recording liquid may exhibit optimum wettability with respect to e.g. the emitting port. Hence, the recording liquid may be optimally supplied into the liquid chamber or the emitting port, such that the recording liquid may be emitted in keeping up with an increased printing speed.

Other objects and specified advantages of the present invention will become more apparent from reading the following explanation of preferred embodiments which will now be made with reference to the accompanying drawings.

### Brief Description of the Drawings

Fig.1 is a perspective view showing an ink jet printer apparatus embodying the present invention.
Fig.2 is a perspective view showing an ink jet print head cartridge provided to the ink jet printer apparatus.
Fig.3 is a cross-sectional view showing the ink jet print head cartridge.
Figs.4A and 4B are schematic views illustrating an ink supply unit when an ink cartridge has been mounted to an ink jet print head cartridge, Fig.4A showing the unit with a supply port closed and Fig.4B showing the unit with the supply port opened.
Fig.5 is a schematic view for illustrating the relationship between the ink cartridge and the head chip in the ink jet print head cartridge.
Figs.6A and 6B are cross-sectional views showing a valving unit in a connecting unit of an ink cartridge, with Fig.6A showing the unit with a valve closed and Fig.6B showing the unit with the valve opened.
Fig.7 is an exploded perspective view showing the chip head of the ink jet print head cartridge.
Fig. 8 is a plan view showing the head chip.
Fig.9, illustrating the state of the head chip emitting an ink droplet, is a cross-sectional view for showing the state in which ink air bubbles of approximately the same size have been formed in an ink liquid chamber.
Fig.10, illustrating the state of the head chip emitting an ink droplet, is a cross-sectional view for showing the state in which an ink liquid droplet has been emitted vertically downward from the nozzle by two ink air bubbles.
Fig.11, illustrating the state of the head chip emitting an ink liquid droplet, is a cross-sectional view for showing the state in which ink air bubbles of differing sizes have been formed in the ink liquid chamber.
Fig.12, illustrating the state of the head chip emitting an ink droplet, is a cross-sectional view for showing the state in which an ink liquid droplet has been emitted in a substantially oblique direction from the nozzle by two ink air bubbles.
Fig.13 is a side view of an ink jet printer apparatus, with a portion thereof being shown in a see-through fashion.
Fig.14 is a schematic block diagram showing a control circuit of the ink jet printer apparatus.
Fig.15 is a schematic block diagram showing an emission control unit of a control circuit.

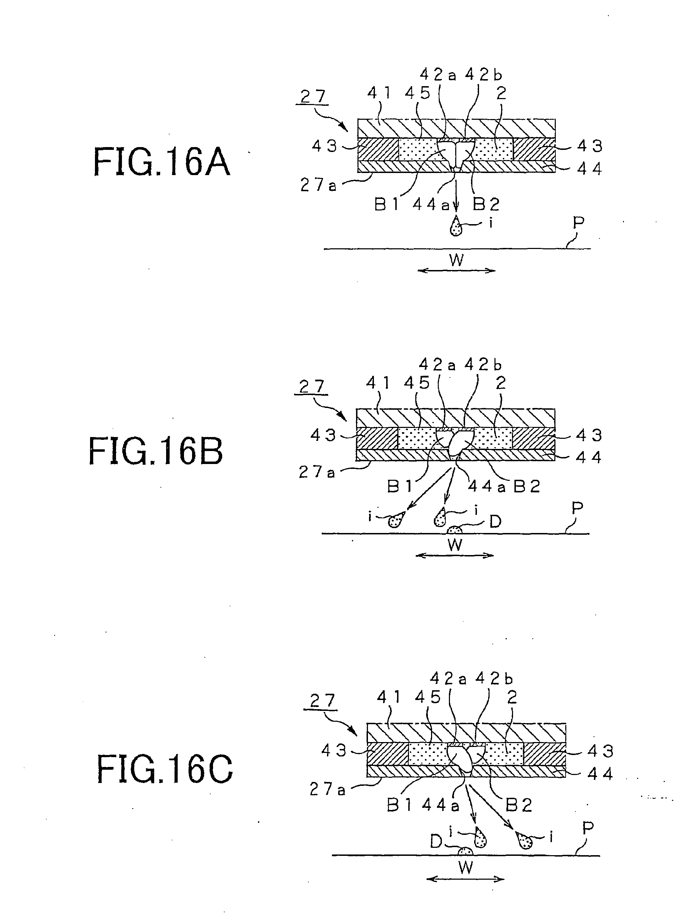

Figs.16A to 16C are cross-sectional views showing the state of the emission control unit controlling the emitting direction of the ink liquid droplets, with Fig.16A schematically showing the state of emission of an ink liquid droplet in a directly downward direction, Fig.16B schematically showing the state of emission of ink liquid droplets in one of oblique directions, along the width of the recording paper sheet, with the nozzle as center, and Fig.16C schematically showing the state of emission of ink liquid droplets in the other oblique direction along the width of the recording paper sheet, with the nozzle as center.

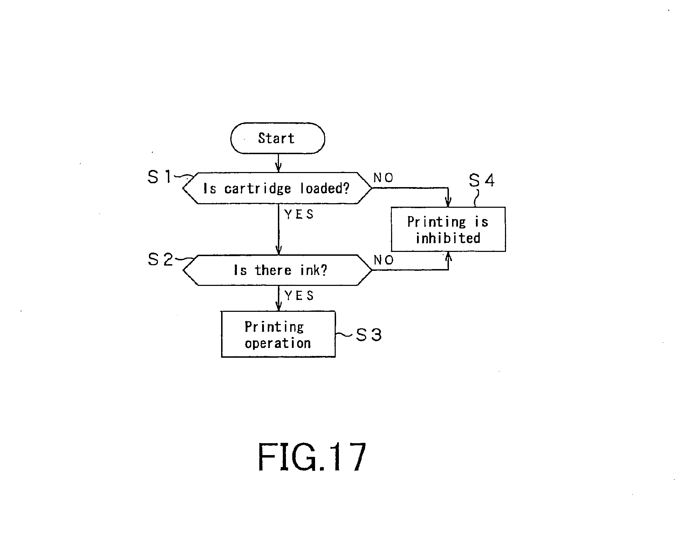

Fig.17 is a flowchart for illustrating the printing operation of the ink jet printer apparatus.

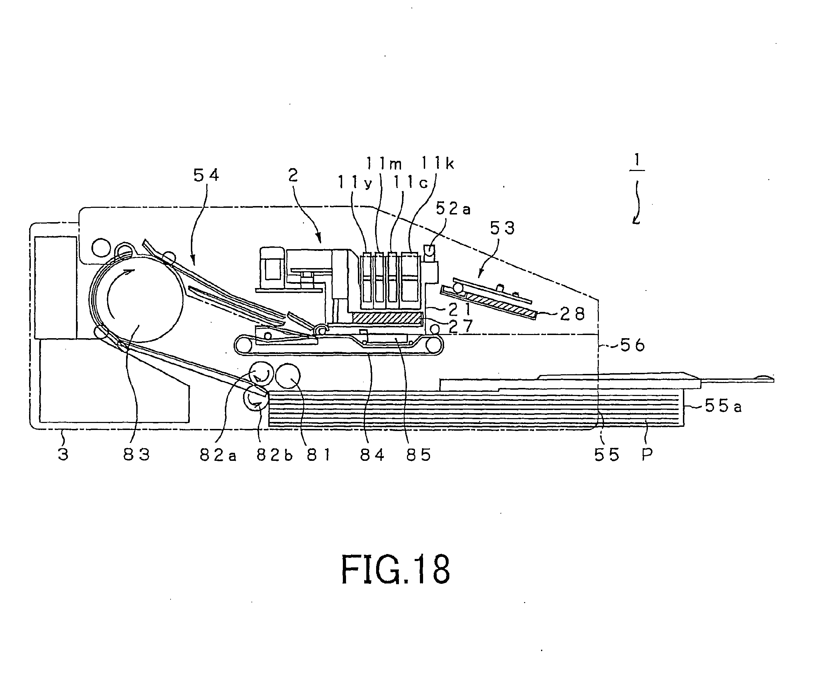

Fig.18 is a side view showing the state in which a head cap opening/ closing unit in the ink jet printer apparatus has been opened, with a portion thereof being shown in a see-through fashion.
Figs.19A to 19C are plan views showing other instances of the head chip, with Fig.19A showing the state in which heating resistors are arranged side-by-side along the running direction of the recording paper sheet, Fig.19B showing the state in which three heating resistors are provided in an ink chamber and Fig.19C showing the state in which four heating resistors are provided in an ink chamber.
Fig.20 is a plan view showing yet another instance of the head chip wherein there is provided one heating resistor.

### Best Mode for Carrying out the Invention

The recording liquid, liquid cartridge and the liquid emitting apparatus and methods, embodying the present invention, will now be explained with reference to the drawings.

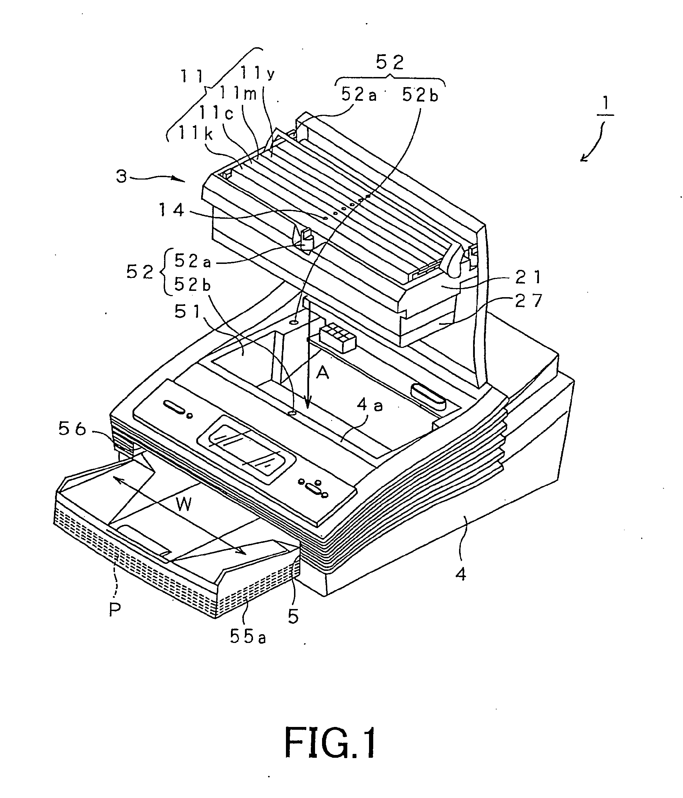

An ink jet printer apparatus of the present embodiment, shown in Fig.1, referred to below simply as a printer apparatus, prints images or letters/ characters by emitting for example the ink onto a recording paper sheet P running in a predetermined direction. This printer apparatus 1 is a so-called line printer apparatus in which a plural number of ink emitting ports (nozzles) are arranged side-by-side along the width of the recording paper sheet P, that is, in the direction indicated by arrow W in Fig.1, in keeping with the printing width of the recording paper sheet P.

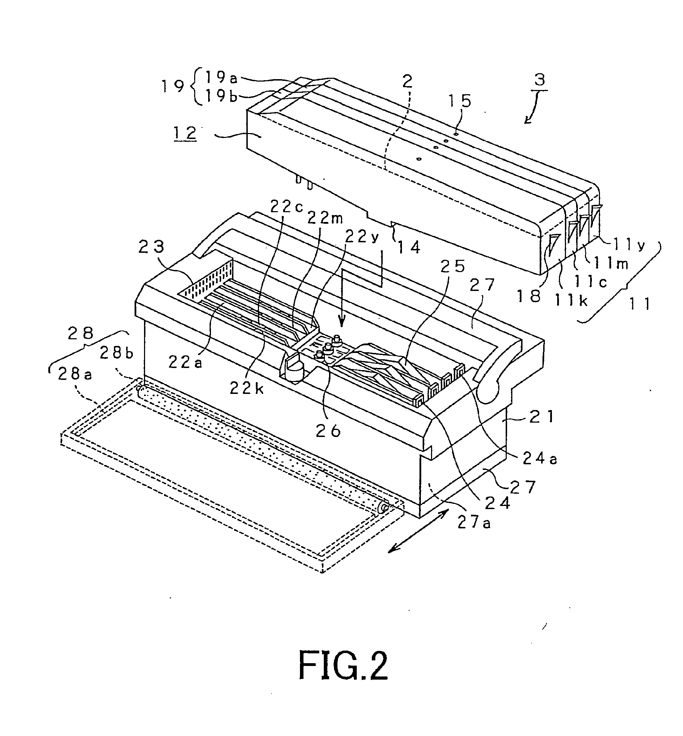

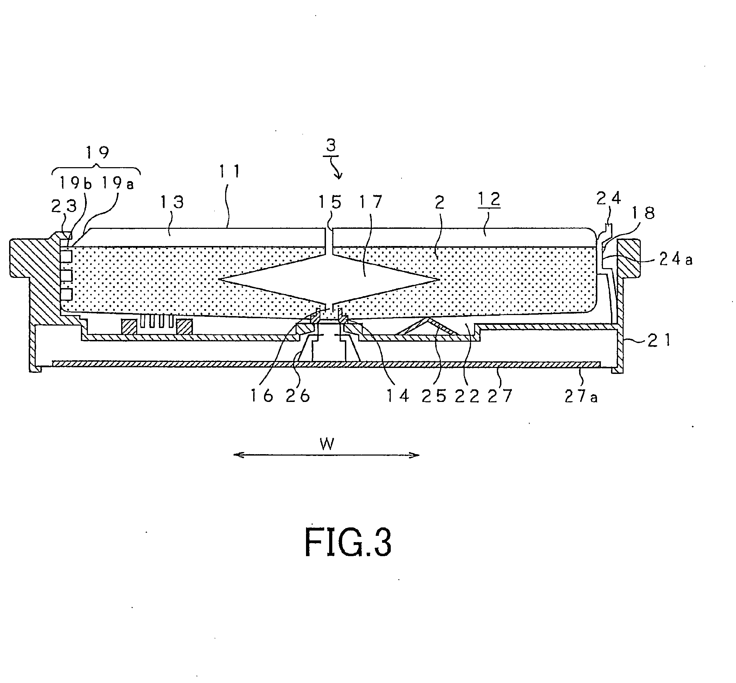

Referring to Figs.2 and 3, this printer apparatus 1 includes an ink jet print head cartridge 3, for emitting an ink 2, referred to below simply as a head cartridge, and a printer main 4 on which to mount the head cartridge 3. With the printer apparatus 1, the head cartridge 3 is detachably mounted to the printer main 4, and furthermore, ink cartridges 11y, 11m, 11c and 11k, as liquid cartridges for accommodating the ink 2 therein, operating as ink supply sources, are detachably mounted to the printer main 4. With the printer apparatus 1, the ink cartridge 11y, enclosing therein a yellow ink, the ink cartridge 11m, enclosing therein a magenta ink, the ink cartridge 11c, enclosing therein a cyan ink, and the ink cartridge 11k, enclosing therein a black ink, may be used. The head cartridge 3, detachably mounted to the printer main 4, and the ink cartridges 11y, 11m, 11c an 11k, detachably mounted to the head cartridge 3, are consumable supplies and may be exchanged by spare items.

With the printer apparatus 1, the recording paper sheet P, accommodated in a tray 55a, may be supplied into the inside of the printer main 4, by mounting the tray 55a in a tray mounting section 5 provided on a front side bottom of the printer main 4. The tray has housed therein a stack of the recording paper sheets P. When the tray 55a is mounted in the tray mounting section 5, provided in the front side of the printer main 4, the recording paper sheet P is fed by a paper sheet feed/ discharge unit 54 from a paper feed port 55 to the back side surface of the printer main 4. The recording paper sheet P, fed to the back side surface of the printer main 4, has its running direction reversed by a reversing roll 83, and is fed from the back side towards the front side of the printer main 4 on a path above a forward or on-going path. On the recording paper sheet P, fed from the back side towards the front side of the printer main 4, printing data corresponding to letter/ character data or image data, supplied from an information processing system 69, such as personal computer, are printed as letters/ characters or images, before the recording paper sheet P, sent from the back side to the front side of the printer main 4, is discharged from a paper sheet discharge port 56, provided in the front side of the printer main 4.

The ink 2, which proves the recording liquid on printing, is a liquid mixture composed of a coloring agent, a solvent for dispersing this coloring agent and a surfactant containing an organic compound shown by the following chemical formula 1: 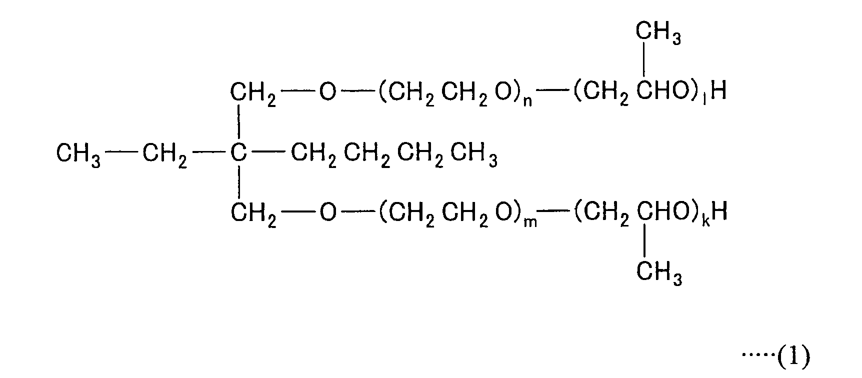 where k+1 is 1 ~ 10 and m+n is 2 ~ 30.
It is noted that the coloring agent may be exemplified by water-soluble dyes, which prove dyestuffs, and by a variety of pigments.

As the coloring agents, water-soluble dyes, exemplified by direct dyes, acidic dyes, basic dyes or reactive dyes, shown below, may be used. Specifically, C.I. Direct Yellow 1, 8, 11, 12, 24, 26, 27, 28, 33, 39, 44, 50, 58, 85, 86, 87, 88, 89, 98, 100 or 110, may, for example, be used as yellow-based direct dyes. These dyes may be used either alone or in combination. As magenta-based direct dyes, C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230 and 321, for example, may be used. These dyes may be used either alone or in combination.

As cyan-based direct dyes, C.I. Direct Blue 1, 2, 6, 8, 15, 22, 25, 41, 71, 76, 77, 78, 80, 86, 90, 98, 106, 108, 120, 158, 160, 163, 165, 168, 192, 193, 194, 195, 196, 199, 200, 201, 202, 203, 207, 225, 226, 236, 237, 246, 248 or 249, for example, may be used. These dyes may be used either alone or in combination. As black-based direct dyes, C.I. Direct Black 17, 19, 22, 32, 38, 51, 56, 62, 71, 74, 75, 77, 94, 105, 106, 107, 108, 112, 113, 117, 118, 132, 133 or 146, may, for example, be used. These dyes may be used either alone or in combination.

As yellow-based acidic dyes, C.I. Acid Yellow 1, 3, 7, 11, 17, 19, 23, 25, 29, 36, 38, 40, 42, 44, 49, 59, 61, 70, 72, 75, 76, 78, 79, 98, 99, 110, 111, 112, 114, 116, 118, 119, 127, 128, 131, 135, 141, 142, 161, 162, 163, 164 or 165, may, for example, be used. These dyes may be used either alone or in combination. As magenta-based acidic dyes, C.I. Acid Red 1, 6, 8, 9, 13, 14, 18, 26, 27, 32, 35, 37, 42, 51, 52, 57, 75, 77, 80, 82, 83, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 199, 209, 211, 215, 216, 217, 219, 249, 252, 254, 256, 257, 262, 265, 266, 274, 276, 282, 283, 303, 317, 318, 320, 321 or 322, for example, may be used, either alone or in combination.

As cyan-based acidic dyes, C.I. Acid Blue 1, 7, 9, 15, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 175, 182, 183, 184, 187, 192, 199, 203, 204, 205, 229, 234 or 236, may, for example, be used, either alone or in combination. As black-based acidic dyes, C.I. Acid Black 1, 2, 7, 24, 26, 29, 31, 44, 48, 50, 51, 52, 58, 60, 62, 64, 67, 72, 76, 77, 94, 107, 108, 109, 110, 112, 115, 118, 119, 121, 122, 131, 132, 139, 140, 155, 156, 157, 158, 159 or 191, may, for example, be used, either alone or in combination.

As yellow-based basic dyes, C.I. Basic Black 2.8, C.I. Basic Yellow 1, 2, 11, 12, 14, 21, 32 or 36, or C.I. Basic Orange 2, 15, 21 or 22 may, for example, be used, either alone or in combination.

As magenta-based basic dyes, C.I. Basic Red 1, 2, 9, 12, 13 or 37, or C.I. Basic Violet 1, 3, 7, 10 or 14, may, for example, be used, either alone or in combination. As cyan-based basic dyes, C.I. Basic Blue 1, 3, 5, 7, 9, 24, 25, 26, 28 or 29 or C.I. Basic Green 1 or 4 may, for example, be used, either alone or in combination.

As yellow-based reactive dyes, C.I. Reactive Yellow 1, 2, 3, 13, 14, 15 or 17, or C.I. Reactive Orange 2, 5, 7, 16, 20 or 24 may, for example, be used, either alone or in combination.

As magenta-based reactive dyes, C.I. Reactive Red 6, 7, 11, 12, 13, 14, 15, 17, 21, 23, 24, 35, 36, 42, 63, 66 or 84 may, for example, be used, either alone or in combination.

As cyan-based reactive dyes, C.I. Reactive Blue 2, 5, 7, 12, 13, 14, 15, 17, 18, 19, 20, 21, 25, 27, 28, 37, 38, 40 or 41, or C.I. Reactive Green 5 or 7 may, for example, be used, either alone or in combination.

As a solvent used for dispersing the dyes, shown above, such solvent which satisfies characteristics, for example, low viscosity, ease of handling, low cost or odorlessness, such as water, is used. As a solvent for the ink 2, ion-exchanged water, for example, may be used for prohibiting unneeded ions from mixing into the ink 2.

In addition to the solvents, such as water or ion-exchanged water, water-soluble organic solvents, such as aliphatic monohydric alcohols, aliphatic polyhydric alcohols or derivatives of the aliphatic polyhydric alcohols, may be contained, in addition to a solvent, such as water or ion-exchanged water, in the ink 2 as solvents.

The aliphatic monohydric alcohols may be enumerated by, for example, lower alcohols, such as methyl alcohol, ethyl alcohol, n-propyl alcohol, i-propyl alcohol, n-butyl alcohol, s-butyl alcohol or t-butyl alcohol, these being used either alone or in combination. With the use of the above-mentioned aliphatic monohydric alcohols, as solvent, surface tension of the ink 2 may be optimized, such that it is possible to obtain the ink 2 superior in penetrability to the recording paper sheet P, dot-forming properties or in the drying performance of the printed image.

In this case, with the use of, for example, ethyl alcohol, i-propyl alcohol or n-butyl alcohol, among the aforementioned aliphatic monohydric alcohols, as the solvent for the solvent of the ink 2, it is possible to produce the ink 2 superior in the above-mentioned properties or performance.

The aliphatic polyhydric alcohols may be enumerated by, for example, alkylene glycols, such as ethylene glycol, diethylene glycol, triethylene glycol, propylene glycol, butylenes glycol or glycerol, polyalkylene glycols, such as polyethylene glycol or polypropylene glycol, and thioglycol. These may be used either alone or in combination.

The derivatives of the aliphatic polyhydric alcohols may be enumerated by, for example, lower alkyl ethers of the aforementioned aliphatic polyhydric alcohols, such as ethylene glycol dimethylether, and lower carboxylates of the aforementioned aliphatic polyhydric alcohols, such as ethylene glycol diacetate. When the aforementioned aliphatic polyhydric alcohols and derivatives thereof are used as solvent for the ink 2, the ink 2 may be less susceptible to drying, while its freezing point may be lowered, so that it becomes possible to suppress deterioration in physical properties on prolonged storage of the ink 2 and to suppress the nozzle 44a from being stopped up with the dried ink 2.

Thus, with the use of one or a mixture of aliphatic monohydric alcohols, aliphatic polyhydric alcohols and derivatives of the aliphatic polyhydric alcohols, having respective inherent properties, in addition to water, for example, as a solvent, it is possible to obtain the ink 2 suited for an aim or application in view.

The ink 2 may also be added with amides, such as dimethyl formamide or diethyl acetoamide, ketones, such as acetone or diacetone alcohol, keto-alcohols, trihydric alcohols, such as tetrahydrofuran, dioxane, γ-butyl lactone, glycerin or 1,2,6-hexane triols, or with nitrogen-containing heterocyclic compounds, such as diethanolamine, triethanolamine, sulforan, 2-pyrrolidone, N-methyl-2-pyrrolidone, or 1,3-dimethyl-2-imidazolidinone, in addition to the aliphatic monohydric alcohols, aliphatic polyhydric alcohols and derivatives of the aliphatic polyhydric alcohols. This improves the aforementioned various characteristics of the ink 2.

In addition to the above-described dyes and solvents, a surfactant containing at least the organic compound represented by the following chemical formula (1): 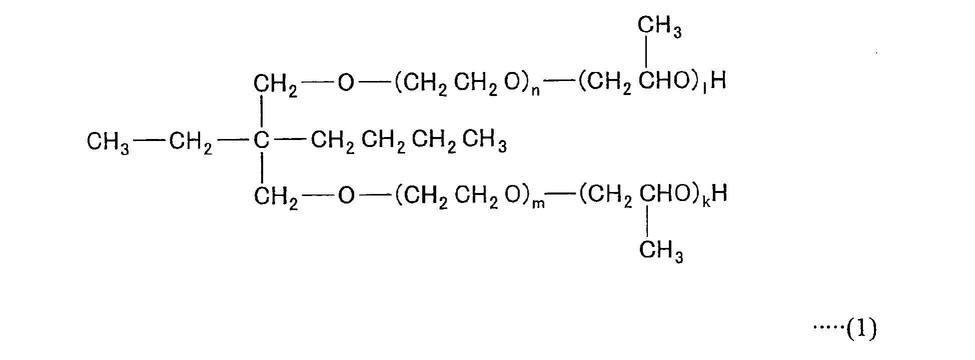 where k+1 = 1 ~ 10 and m+n = 2 ~ 30, is also contained in the ink 2.

Moreover, in addition to the surfactant containing at least the organic compound represented by the chemical formula (1), a surfactant having an organic compound represented by the following chemical formula (2) 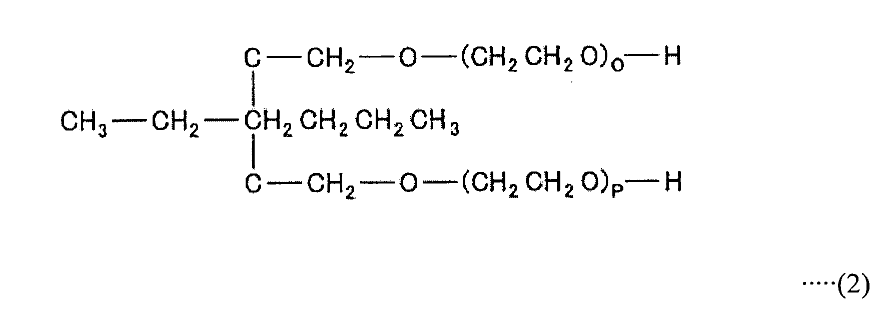 where o+p is an integer not less than 2, may also be contained in the ink 2.

Moreover, in addition to the surfactant containing an organic compound represented by the chemical formula 1, a surfactant obtained on mixing polyoxyethylene acetyleneglycols to at least one of ethers, such as polxyethylene alkylether or polyoxyethylene alkylphenyl ether, esters, such as polyoxyethylene fatty acid esters, polyoxyethylene polyoxypropylene copolymers, or nitrogen-containing compounds, such as polyoxyethylene alkylamine ether or fatty acid diethanol amide, may be contained in the ink 2.

Since the ink 2, obtained on mixing the above-described components, contains a surfactant containing at least the organic compound represented by the chemical formula 1, it is possible to suppress foaming and to optimize wetting performance with respect to the recording paper sheet P. That is, the ink may be quickly penetrated into the recording paper sheet P in a direction along its thickness so that it assumes a state as if it has been dried in situ. Hence, the printed image or the letter/ character data, obtained on depositing the ink 2 on the recording paper sheet P, is of high quality, being free of bleeding or blurring.

Moreover, with the ink 2, since the cloud point of the surfactant, containing an organic compound represented by the chemical formula 1, is as high as about 80°C, there is no risk that the cloud point of the surfactant contained in the ink is exceeded when the ink containing the surfactant is emitted as liquid droplet, as was the case with the conventional system. Hence, the ink may be deposited on the recording paper sheet P as liquid droplets in the state of stabilized physical properties.

The content in the ink 2 of the surfactant containing the organic compound represented by the chemical formula 1 is not less than 0.05 wt% and not larger than 10 wt%, preferably not less than 1 wt% and not larger than 5 wt%, based on the total weight of the ink 2. If the content of the surfactant containing the organic compound, shown by the chemical formula 1, is lesser than 0.05 wt%, the wetting performance of the ink for the recorded paper sheet tends to be lowered.

On the other hand, if the content in the total quantity of the ink 2 of the surfactant containing the organic compound represented by the chemical formula 1 is larger than 10 wt%, there is presented an inconvenience that the ink 2 is liable to foaming. It is therefore crucial, for obtaining the ink 2 less susceptible to foaming, and for assuring proper seeping of the ink into the bulk of the recording paper sheet P, that the content in the total quantity of the ink 2 of the surfactant containing the organic compound of the chemical formula 1 shall be not less than 0.05 wt% and not larger than 10 wt%.

It is also possible for the ink 2 to contain for example a viscosity adjustment agent, a surface tension adjustment agent, a pH adjustment agent, antiseptics, a rust-proofing agent or a mold-proofing agent, in addition to the aforementioned dyes, solvents and surfactants. Specifically, the viscosity adjustment agent, surface tension adjustment agent and the pH adjustment agent may be exemplified by proteins, such as gelatin or casein, natural rubber, such as gum Arabic, cellulose derivatives, such as methyl cellulose, carboxymethyl cellulose or hydroxymethyl cellulose, lignin sulfonate, natural high polymeric materials, such as schellac, polyacrylates, salts of a styrene- acrylic acid copolymer, polyvinyl alcohol or polyvinyl pyrrolidone. The ink 2 may be added with one or more of these agents.

The antiseptics, rust-proofing agent and the mold-proofing agent may be enumerated by, for example, benzoic acid, dichlorophene, hexachlorophene, sorbic acid, p-hydroxy benzoate and ethylene diamine tetraacetate (EDTA). The ink may be added with one or more of these agents.

The ink 2 of the above-described configuration may be prepared as follows: In preparing the ink 2 of the solution system, employing for example a dye as a coloring agent, the coloring agent, composed of the above-described dye, the solvent and the surfactant are mixed together, and the resulting mixture is agitated and dispersed with for example a screw stirrer, as the mixture is heated to 40°C to 80°C, to prepare the ink 2. The ink 2 of the dispersion system, employing a pigment as the coloring agent, as an example, may be prepared by a pigment comminuting method, which has so far been known and used. This pigment comminuting method consists in dispersing the pigment and the surfactant in a solvent, using a dispersion device. such as a ball mill, a sand mill, an attriter, a roll mill, an agitator, a Henschel mixer, a colloid mill, an ultrasonic homogenizer, a pearl mill or a wet jet mill, to prepare the ink. The ink, prepared in this manner, is passed through for example a filter for filtration for removing contaminants or coarse-sized particles.

The so prepared ink 2 is accommodated in the ink cartridge 11, such that the yellow-tinted ink, magenta-tinted ink, cyan-tinted ink and the black-tinted ink are accommodated in the ink cartridges 11y, 11m, 11c and 11k, respectively, as shown in Figs.2 and 3.

The head cartridge 3, detachably mounted to the printer main 2, forming the above-described printer apparatus 1, and the ink cartridges 11y, 11m, 11c and 11k, detachably mounted to the head cartridge 3, will now be explained with reference to the drawings.

The head cartridge 3, performing the printing on the recording paper sheet P, is loaded from the upper surface of the printer main 4, that is, from the direction indicated by arrow A in Fig.1, and emits the ink 2 onto the recording paper sheet P, traveling by a paper sheet feed/ discharge unit 54, by way of effecting the printing.

The head cartridge 3 pressurizes the ink 2, by the pressure generated by a pressure generating means of, for example, the electro-thermal or electro-mechanical system, for finely dividing the ink 2 into fine particles, which are then emitted and sprayed in the form of liquid droplets on the major surface of a support, such as recording paper sheet P. Specifically, the head cartridge 3 includes a cartridge main 21, on which cartridge main 21 are mounted the ink cartridges 11y, 11m, 11c and 11k, which are containers charged with the inks 2 of respective colors. Meanwhile, the ink cartridges 11y, 11m, 11c and 11k are sometimes referred to below simply as ink cartridge or cartridges 11.

Each ink cartridge 11, detachably mounted to the head cartridge 3, includes a cartridge vessel 12, molded by injection molding a synthetic resin material, such as polypropylene, exhibiting high strength and resistance against ink. The cartridge vessel 12 is formed to a substantially rectangular shape, with the length of a longitudinal side thereof approximately equal to the width-wise size of the recording paper sheet P used, such as to provide for the largest possible capacity of the ink to be stored in its inside.

Specifically, the cartridge vessel 12, forming the ink cartridges 11, is provided with an ink container 13, holding the ink 2, an ink supply unit 14 for supplying the ink 2 from the ink container 13 into the inside of the cartridge main 21 of the head cartridge 3, and an opening for communication with outside 15 for air intake from outside into the inside of the ink container 13. The cartridge vessel also includes an air inlet duct 16 for introducing air taken in via opening 15 into the inside of the ink container 13, and a reservoir 17 for transient storage of the ink 2 between the opening 15 and the air inlet duct 16. The cartridge vessel 12 is also provided with a plural number of retention lugs 18 and a plural number of engagement steps 19 for retaining the ink cartridge 11 to the cartridge main 21.

The ink container 13 is formed of a material exhibiting high air-tightness and delimits a space within which to accommodate the ink 2. The ink container 13 is formed to approximately a rectangular shape having a longitudinal size approximately equal to the size along the width-wise direction W of the recording paper sheet P shown in Fig.3.

The ink supply unit 14 is provided at a mid lower portion of the ink container 13. This ink supply unit 14 is a protuberantly-shaped nozzle communicating with and intruding into the ink container 13. The distal end of the nozzle is fitted in a connecting unit 26 of the head cartridge 3, as later explained, to connect the cartridge vessel 12 of the head cartridge 3 to the cartridge main 21 of the head cartridge 3.

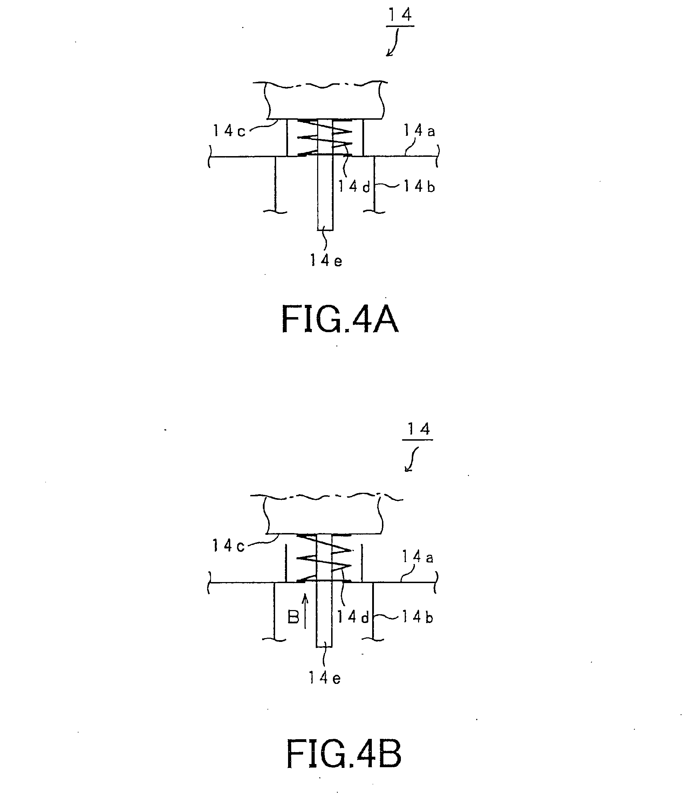

Referring to Figs.4A and 4B, the ink supply unit 14 is provided with a supply port 14b for supplying the ink 2 onto the bottom surface 14a of the ink cartridges 11. This bottom surface 14a is provided with a valve 14c for opening/closing a supply port 14b, a coil spring 14d for biasing the valve 14c in a direction of closing the supply port 14b, and an opening/ closing pin 14e for opening/ closing the valve 14c.

The supply port 14b, connected to the connecting unit 26 of the head cartridge 3, for supplying the ink 2, is closed, in a stage prior to loading of the ink cartridge 11 on the cartridge main 21 of the head cartridge 3, by the valve 14c being biased in a direction of closing the supply port 14b, under the biasing force of the coil spring 14d, as a biasing member, as shown in Fig.4A.

When the ink cartridges 11 is loaded on the cartridge main 21, the opening/closing pin 14e is uplifted in an opposite direction to the biasing direction of the coil spring 14d, by an upper part of the connecting unit 26 of the cartridge main 21, constituting the head cartridge 3, as shown in Fig.4B. The so uplifted opening/closing pin 14e uplifts the valve 14c, against the bias of the coil spring 14d, to open the supply port 14b.

In this manner, the ink supply unit 14 of the ink cartridges 11 is connected to the connecting unit 26 of the head cartridge 3 to establish communication between the ink container 13 and an ink reservoir 31 to enable the ink 2 to be supplied to the ink reservoir 31.

When the ink cartridges 11 is extracted from the connecting unit 26 of the head cartridge 3, that is, when the ink cartridges 11 is dismounted from the mounting unit 22 of the head cartridge 3, the uplifting of the valve 14c by the opening/ closing pin 14e is released, with the valve 14c being moved in the biasing direction of the coil spring 14d to close the supply port 14b. This prohibits the ink 2 in the ink container 13 from leaking even when the ink cartridges 11 is about to be loaded on the cartridge main 21 with the distal end of the ink supply unit 14 facing downwards. When the ink cartridge 11 is extracted from the cartridge main 21, the supply port 14b is closed quickly by the valve 14c, thereby prohibiting the ink 2 from leaking from the distal end of the ink supply unit 14.

Referring to Fig.3, the opening for communication with outside 15 is an air communication opening for air intake from outside the ink cartridge 11 into the ink container 13. The opening 15 is provided in the upper surface, herein at a mid portion of the upper surface, of the cartridge vessel 12, where the opening faces outwards in order to take in air even when the ink cartridge is mounted on the mounting unit 22 of the head cartridge 3. That is, the opening 15 faces outwards so that, when the ink cartridge is mounted on the mounting unit 22, the opening 15 faces outwards in order to take in air from outside. The opening 15 takes in air in an amount corresponding to the decreased quantity of the ink 2 in the ink container 13 when the ink cartridge 11 is mounted to the cartridge main 21 and the ink 2 has flown down from the ink container 13 towards the cartridge main 21.

The air inlet duct 16 provides for communication between the ink container 13 and the opening 15 to introduce air taken in from the opening 15 into the ink container 13. Hence, when the ink cartridge 11 is mounted on the cartridge main 21 and the ink 2 is supplied into the inside of the cartridge main 21 of the head cartridge 3, with the quantity of the ink 2 in the ink container 13 then being decreased to lower the pressure inside the ink container, the inner pressure in the ink container 13 may be maintained in a balanced state due to air introduced into the ink container via air inlet duct 16 into the ink container 13 to enable the ink 2 to be adequately supplied into the inside of the cartridge main 21.

The reservoir 17 is provided between the opening for communication with outside 15 and the air inlet duct 16, and is used for transiently holding the ink 2 to prohibit the ink from flowing out precipitously when the ink 2 has leaked from the air inlet duct 16 communicating with the ink container 13. The reservoir 17 is substantially diamond-shaped in cross-section with the long diagonal line of the diamond shape of the reservoir parallel to the longitudinal direction of the ink container 13. The air inlet duct 16 is provided at a lower apex point of the diamond shape of the ink container 13, that is, at the lowermost end of the short diagonal line of the reservoir, for restoring the ink 2 which has flown out into the reservoir from the ink container 13 back into the ink container 13.

The opening for communication with outside 15 is also provided at the lowermost apex on the short diagonal line of the reservoir 17 to render it difficult for the ink intruded from the ink container 13 to flow outwards via opening for communication with outside 15.

A plural number of retention lugs 18 are formed on one short lateral side of the ink cartridges 11, and are engaged with engagement openings 24a formed in a plural number of latch levers 24 of the cartridge main 21 of the head cartridge 3, as shown in Figs. 2 and 3. Each retention lug 18 has its upper surface formed on a plane substantially perpendicular to the lateral surface of the ink container 13, while having its lower surface inclined from the lateral surface towards the aforementioned upper surface.

The engagement steps 19 are provided towards an upper end of the lateral surface of the ink cartridge 11 provided with the retention lugs 18. Each engagement step 19 is formed by an inclined surface 19a, having one end continuing to the upper surface of the cartridge vessel 12, and a planar surface 19b, continuing to the other end of the inclined surface 19a and to the opposite side lateral surface of the ink cartridge and extending parallel to the upper surface of the ink cartridge. Since the ink cartridge 11 is provided in this manner with the engagement steps 19, the height of the lateral surface of the ink cartridge, provided with the planar surfaces 19b, is lower by one step than the upper surface of the cartridge vessel 12, with the ink cartridge 11 engaging at these steps with a plural number of engagement pieces 23 of the cartridge main 21.

The engagement steps 19 are provided on the lateral surface of the ink cartridge on the inserting side when the ink cartridge is inserted into the mounting unit 22 of the head cartridge 3. The engagement steps are engaged by the engagement pieces 23 of the mounting unit 22 of the head cartridge 3 to serve as a rotational fulcrum point when the ink cartridge 11 is mounted to the mounting unit 22.

The ink cartridge 11, designed and constructed as described above, includes a residual ink quantity sensor for detecting the residual quantity of the ink 2 in the ink container 13, and a discriminating unit for discriminating the ink cartridges 11y, 11m, 11c and 11k, in addition to the above-described components.

Next, the head cartridge 3, having loaded the ink cartridges 11y, 11m, 11c and 11k, in which are accommodated the inks 4 of yellow, magenta, cyan and black, respectively, will now be explained.

Referring to Figs.2 and 3, the head cartridge 3 is made up of the ink cartridge 11 and the cartridge main 21, as described above. The cartridge main 21 includes mounting units 22y, 22m, 22c and 22k, on which are mounted the ink cartridges 11. In the following, if these mounting units are referred to collectively, they are simply depicted as mounting units 22. The cartridge main also includes the engagement pieces 23 and the latch levers 24, for securing the ink cartridge 11, a biasing member 25 for biasing the ink cartridge 11 in the takeout direction, a connecting unit 26 connected to the ink supply units 14 so as to be supplied with the ink 2, an head chip 27 for emitting the ink 2, and a head cap 28 for protecting the head chip 27.

The upper surface of the mounting unit 22, on which are mounted the ink cartridges 11, is formed as a recessed portion used as a receiving/ ejecting opening for the ink cartridges 11. Here, four ink cartridges 11 are accommodated side-by-side in the direction substantially perpendicular to the width-wise direction of the recording paper sheet P, that is, along the running direction of the recording paper sheet P. Since the mounting unit 22 receives the ink cartridges 11, it is arranged with its longitudinal side extending along the printing width, as are the ink cartridges 11. The ink cartridge 11 is accommodated and mounted in the cartridge main 21.

The mounting unit 22 is an area within which the ink cartridge 11 is mounted, as shown in Fig.2. The mounting unit 22 includes a mounting unit 22y, within which the ink cartridge 11y for yellow is mounted, a mounting unit 22m, within which the ink cartridge 11 m for magenta is mounted, a mounting unit 22c, within which the ink cartridge 11 c for cyan is mounted, and a mounting unit 22k, within which the ink cartridge 11k for black is mounted. These mounting units 22y, 22m, 22c and 22k are delimited from one another by partitions 22a.

In general, the black ink cartridge 11k consumes much ink and is formed to a larger thickness to accommodate a larger quantity of the ink 2. Hence, the black ink cartridge is wider in width than the other ink cartridges 11y, 11m and 11c, whilst the mounting unit 22k is wider in width than the other mounting units 22y, 22m or 22c in keeping with the thickness of the ink cartridge 11k.

In an opening end of the mounting unit 22, in which is mounted the ink cartridge 11, the engagement pieces 23 are formed, as shown in Fig.3. These engagement pieces 23 are provided on the longitudinal lateral side of the mounting unit 22 and engaged with the engagement steps 19 of the ink cartridge 11.

The ink cartridge 11 may be mounted on the mounting unit 22 by obliquely introducing it into the mounting unit 22, with the engagement steps 19 of the ink cartridge 11 as a leading end, and by rotating the side of the ink cartridge 11 not having the engagement steps 19 towards the mounting unit 22, with the engaging locations of the engagement steps 19 and the engagement pieces 23 as the fulcrum point of rotation. By so doing, the ink cartridge 11 may easily be mounted on the mounting unit 22.

The latch levers 24 are each formed by warping a spring plate, as shown in Fig.3. These latch levers are provided on the opposite lateral surface of the mounting unit 22 with respect to the engagement pieces 23 of the mounting unit 22, that is, on the opposite longitudinal lateral surface of the mounting unit. Each latch lever 24 has its proximal end mounted as one with the bottom side of the opposite lateral surface of the mounting unit 22, while having its distal end elastically movable in a direction towards and away from this lateral surface. An engagement recess 24a is formed towards the distal end of the latch lever.

The latch levers 24 are elastically deformed, at the same time as the ink cartridge 11 is mounted to the mounting unit 22, with the engagement recesses 24a engaging with the retention lugs 18 of the ink cartridge 11 for prohibiting the ink cartridge 11 mounted on the mounting unit 22 from being detached from the mounting unit 22.

The biasing member 25 is formed by bending a spring plate, mounted on a bottom surface towards the lateral side provided with the engagement steps 19 of the ink cartridge 11 for biasing the ink cartridge 11 in a direction of detaching the ink cartridge. The biasing member 25 has an apex point, formed by warping, and is elastically displaced in a direction towards and away from the bottom surface. The biasing member pressures the bottom surface of the ink cartridge 11 at its apex point to bias the ink cartridge 11 in a direction of dismounting the ink cartridge from the mounting unit 22. The biasing member 25 ejects the ink cartridge 11 from the engagement pieces 23 when the retention lugs 18 are disengaged from engagement recesses 24a of the latch lever 24.

The connecting units 26, connected to the ink supply units 14 of the ink cartridges 11y, 11m, 11c and 11k, when the ink cartridges 11 y, 11m, 11c and 11k are mounted in the mounting units 22y, 22m ,22c and 22k, are provided at mid portions in the longitudinal direction of the mounting units 22y, 22m ,22c and 22k. These connecting units 26 prove ink supply ducts for supplying the ink 2 to the head chip 27 provided to the bottom surface of the cartridge main 21 for emitting the ink 2 from the ink supply units 14 of the ink cartridges 11 mounted on the mounting units 22.

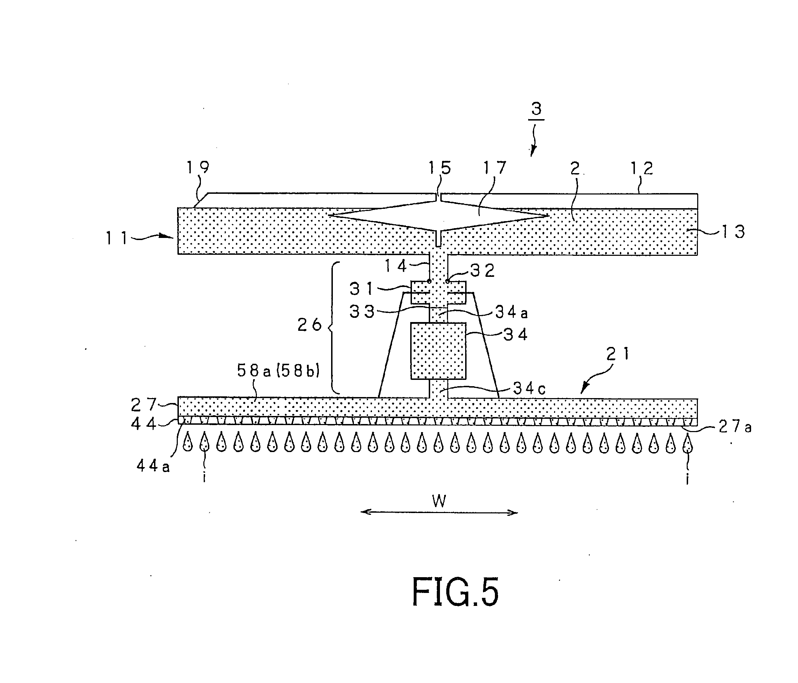

Specifically, the connecting units 26 are each provided with an ink reservoir 31, for holding the ink 2 supplied from the ink cartridge 11, a sealing member 32 for sealing the ink supply unit 14, connected to the connecting unit 26, a filter 33 for removing impurities in the ink 2, and a valving unit 34 for opening/ closing the supply passage to the head chip 27, as shown in Fig.5.

The ink reservoir 31 is a space connecting to the ink supply unit 14 and adapted for storing the ink 2 supplied from the ink cartridge 11. The sealing member 32 is provided at an upper end of the ink reservoir 3 for hermetically sealing the space between the ink reservoir 31 and the ink supply unit 14 to prohibit the ink 2 from leaking to outside when the ink supply unit 14 is connected to the ink reservoir 31. The filter 33 removes impurities, such as dust and dirt, mixed into the ink 2 during loading/ unloading of the ink cartridge 11, and is provided downstream of the ink reservoir 31.

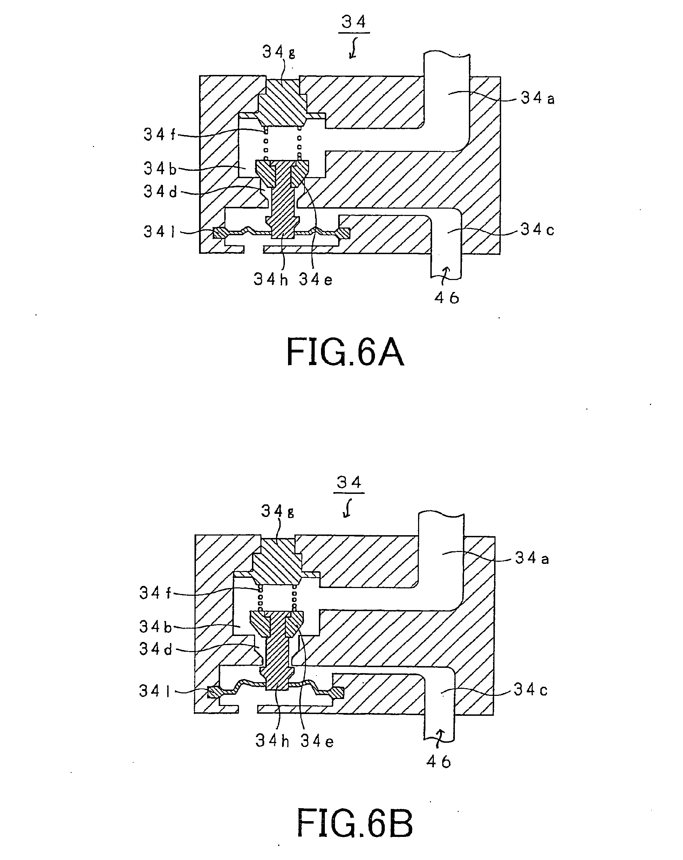

Referring to Figs.6A and 6B, the valving unit 34 includes an ink inlet duct 34a, supplied with the ink 2 from the ink reservoir 31, an ink chamber 34b, supplied with the ink 2 from the ink inlet duct 34a, an ink outlet duct 34c for allowing the ink 2 to flow outwards from the ink chamber 34b, an opening 34d provided in the ink chamber 34b in an area between the ink inlet duct 34a and the ink outlet duct 34c, a valve 34e for opening/ closing the opening 34d, and a biasing member 34f for biasing the valve 34e in a direction of closing the opening 34d. The valving unit 34 also includes a negative pressure adjustment screw 34g for adjusting the biasing force of the biasing member 34f, a valve shaft 34h connected to the valve 34e, and a diaphragm 34i connected to the valve shaft 34h.

The ink inlet duct 34a is a supply duct for connecting to the ink container 13 for supplying the ink 2 in the ink container 13 in the ink cartridge 11 via ink reservoir 31 to the head chip 27. The ink inlet duct 34a is provided for extending from the bottom side of the ink reservoir 31 as far as the ink chamber 34b. The ink chamber 34b is a substantially rectangular spacing formed as one with the ink inlet duct 34a, ink outlet duct 34c and with the opening 34d. The ink 2 flows from the ink inlet duct 34a so as to be discharged via opening 34d from the ink outlet duct 34c.

The ink outlet duct 34c is an ink supply duct in which the ink 2 is supplied from the ink chamber 34b via opening 34d and which is connected to the head chip 27. The ink outlet duct 34c is extended from the bottom surface side of the ink chamber 34b as far as the head chip 27.

The valve 34e is used for closing the opening 34d for separating the ink inlet duct 34a and the ink outlet duct 34c from each other, and is provided in the ink chamber 34b. The valve 34e is movable vertically under the biasing force of the biasing member 34f, the force of restoration of the diaphragm 34i, connected to the valve shaft 34h, and under the negative pressure of the ink 2 towards the ink outlet duct 34c.

When in the lower position, the vale 34e closes the opening 34d for separating the ink chamber 34b into the ink inlet duct 34a and the ink outlet duct 34c for interrupting the supply of the ink 2 towards the ink outlet duct 34c. When in the upper end position, against the bias of the biasing member 34f, the valve 34e allows the ink 2 to be supplied to the head chip 27 without interrupting the passage between the ink supply from the ink inlet duct 34a and the ink outlet duct 34c of the ink chamber 34b. Although there is no limitation to the material type of the valve 34e, it is formed of, for example, a caoutchouc material, or a so-called elastomeric material.

The biasing member 34f is, for example, a compression coil spring interconnecting the negative pressure adjustment screw 34g and the valve 34e between the upper surface of the valve 34e and the upper surface of the ink chamber 34b for biasing the valve 34e under its own biasing force in a direction of closing the opening 34d with the valve 34e. The negative pressure adjustment screw 34g is a screw for adjusting the biasing force of the biasing member 34f and the biasing force of the biasing member 34f may be adjusted by acting on the negative pressure adjustment screw 34g. Hence, with the negative pressure adjustment screw 34g, it is possible to adjust the negative pressure of the ink 2 actuating the valve 34e, adapted for opening/ closing the opening 34d, as will be explained subsequently in detail.

The valve shaft 34h is a shaft interconnecting the valve 34e connected at one end and the diaphragm 34i connected at the other end for enabling the concerted movements of the valve and the diaphragm 34i. The diaphragm is a thin elastic sheet connected to the opposite end of the valve shaft 34h. This diaphragm 34i has one major surface facing the ink outlet duct 34c of the ink chamber 34b and the opposite major surface in contact with outside air, and is elastically displaced towards the outside air side or towards the ink outlet duct 34c under atmospheric pressure and under the negative pressure of the ink 2.

With the above-described valving unit 34, the valve 34e is pressurized in a direction of closing the opening 34d of the ink chamber 34b under the force of bias exerted by the biasing member 34f and that exerted by the diaphragm 34i, as shown in Fig.6A. When the ink 2 is emitted from the head chip 27 to raise the negative pressure of the ink 2 in the portion of the ink chamber 34b towards the ink outlet duct 34c, partitioned by the opening 34d, the diaphragm 34i is uplifted by the atmospheric pressure, under the negative pressure of the ink 2, to uplift the valve 34e, along with the valve shaft 34h, against the biasing force of the biasing member 34f, as shown in Fig.6B.

At this moment, the opening 34d between the side of the ink inlet duct 34a and the side of the ink outlet duct 34c of the ink chamber 34b is opened to permit the ink 2 to be supplied from the side of the ink inlet duct 34a into the side of the ink outlet duct 34c. The negative pressure of the ink 2 is lowered, and the diaphragm 34i resumes its original shape, by its own force of restoration, with the valve 34e being pulled down, along with the valve shaft 34h, under the force of bias of the biasing member 34f, for closing the ink chamber 34b. With the valving unit 34, the above-described movements are repeated each time the ink 2 is emitted such that the negative pressure of the ink 2 is raised.

With the connecting unit 26, when the ink 2 in the ink container 13 is supplied into the ink chamber 34b, the quantity of the ink 2 in the ink container 13 is decreased, however, at this moment, outside air is introduced from the air inlet duct 16 into the ink cartridge 11. The air introduced into the ink cartridge 11 is sent to an upper portion of the ink cartridge 11. This restores the state prior to emission of the ink droplet i from a nozzle 44a, which will be explained subsequently, so that a state of equilibrium is reached. The state of equilibrium is set up in a condition in which the ink 2 in the air inlet duct 16 is nearly depleted.

The head chip 27 is arranged for extending along the bottom surface of the cartridge main 21, as shown in Fig.5. A plural number of nozzles 44a, as ink emitting ports for emitting ink liquid droplets i, supplied from the connecting units 26, are arranged in a line, from one color to another, along the width-wise direction of the recording paper sheet P, that is, in the direction indicated by arrow W in Fig.5.

The head cap 28 is a cover provided for protecting the head chip 27, as shown in Fig.2, and is dismounted from the head chip 27 in carrying out the printing operation. The head cap 28 is provided with a groove 28a, provided in the opening/ closing direction, and a cleaning roll 28b, extending longitudinally for sucking excess ink 2 deposited on an emitting surface 27a of the head chip 27.

The head cap 28 is opened/ closed along this groove 28a in the transverse direction of the ink cartridge 11. At this moment, the cleaning roll 28b is rotated, as it abuts against the emitting surface 27a of the head chip 27 to suck up any excess ink 2 to clean the emitting surface 27a of the head chip 27. The cleaning roll 28b is formed of, for example, a highly hygroscopic material. When the printing apparatus is not in operation for printing, the head cap 28 protects the ink 2 in the head chip 27 against drying.

The above-described head cartridge 3 includes a residual ink quantity detecting unit for detecting the residual quantity of the ink in the ink cartridge 11, and an ink presence/ absence detecting unit for detecting the presence/ absence of the ink 2, when the ink supply unit 14 is connected to the connecting unit 26, as an example, in addition to the above components.

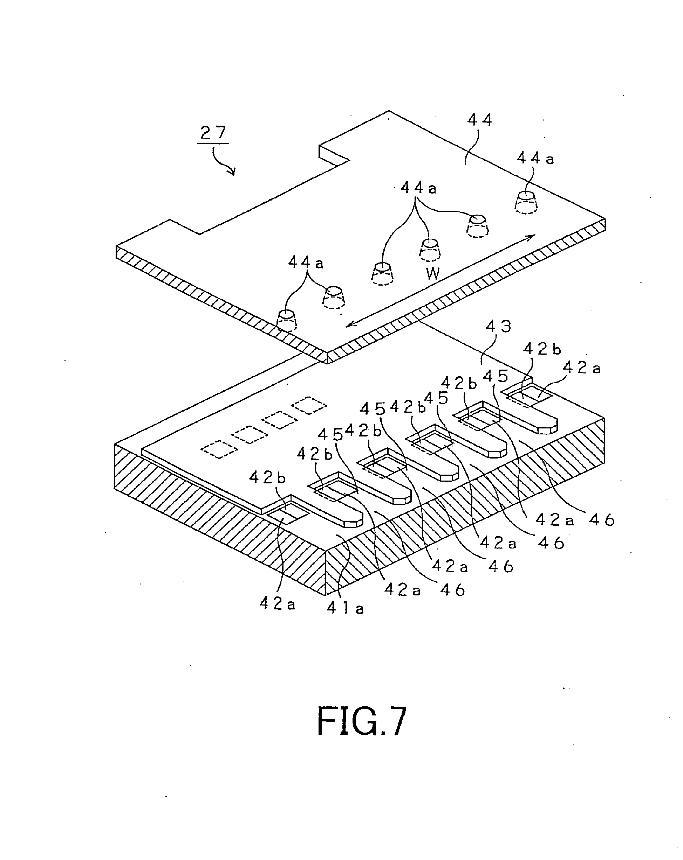

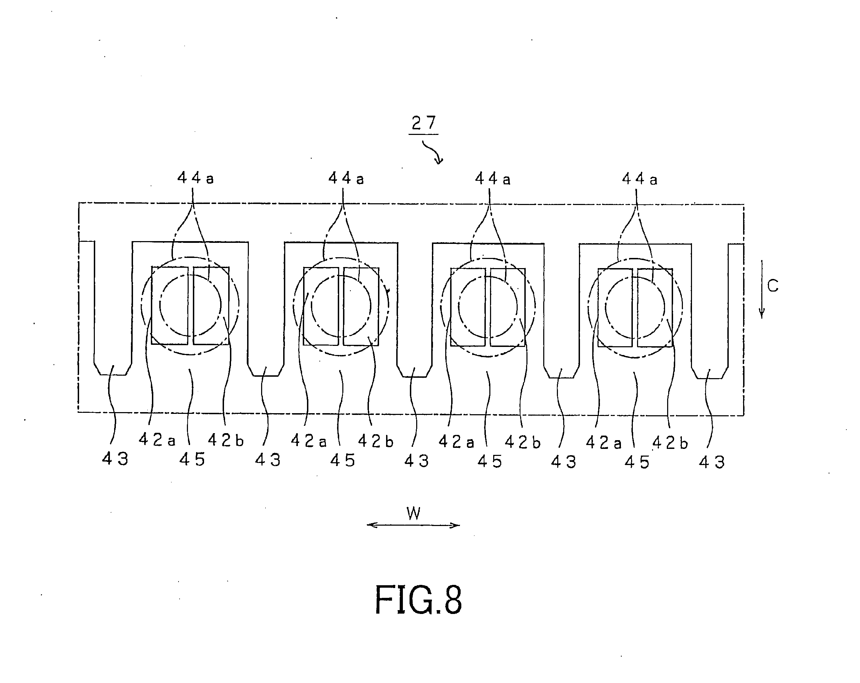

Referring to Figs.7 and 8, the head chip 27 for each color ink 2 includes, from one color to another, a circuit substrate 41, as a base, a pair of heating resistors 42a, 42b, arranged side-by-side in a direction substantially perpendicular to the running direction of the recording paper sheet P, that is, along the width-wise direction of the recording paper sheet P, a film 43 for preventing leakage of the ink 2, and a nozzle sheet 44 having many nozzles 44a through which the ink 2 is emitted in the form of liquid droplets. The head chip also includes ink liquid chambers 45, defining a space through which the ink 2 is supplied, and ink flow ducts 46 for supplying the ink 2 to the ink liquid chambers 45.

The circuit substrate 41 is a semiconductor substrate of, for example, silicon, and includes a pair of heating resistors 42a, 42b on its major surface 41a. These heating resistors 42a, 42b are connected to an emission controller 63, as later explained, provided on the circuit substrate 41. This emission controller 63 is an electronic circuit formed by e.g. a logic IC (integrated circuit) and a driver transistor.

The paired heating resistors 42a, 42b are pressure generating devices which are heated by the pulse current supplied from the emission controller 63 to heat the ink 2 in the ink liquid chambers 45 to raise the internal pressure. The ink 2, heated by these paired heating resistors 42a, 42b, is emitted as liquid droplets via nozzles 44a provided in the nozzle sheet 44, as will be explained subsequently.

The film 43 is formed on one major surface 41a of the circuit substrate 41. The film 43 is a dry film resist of, for example, the type hardened on light exposure. It is first formed on substantially the entire area of the major surface 41 a of the circuit substrate 41 and subjected to a photolithographic process for removing unneeded portions. The film is formed for surrounding the paired heating resistors 42a, 42b in recessed portions. The portions of the film 43 surrounding the paired heating resistors 42a, 42b form part of the ink liquid chambers 45.

The nozzle sheet 44 is a sheet-like member, with a thickness on the order of 10 to 15µm, provided with the nozzles 44a for emitting the ink droplets i, and is formed on the surface of the film 43 opposite to the circuit substrate 41. The nozzles 44a are openings of an extremely small diameter of the order of 15 to 18 µm, opened as circular holes in the nozzle sheet 44. The nozzles 44a are arranged facing the paired heating resistors 42a, 42b. The nozzle sheet 44 forms a part of the ink liquid chambers 45.

The ink liquid chambers 45 are each an area surrounded by the circuit substrate 41, paired heating resistors 42a, 42b, film 43 and the nozzle sheet 44 for storage of the ink 2 supplied from the ink flow duct 46. Each ink liquid chamber forms a space in which is stored the ink 2 supplied from the ink flow duct 46. The ink liquid chamber 45 is heated by the paired heating resistors 42a, 42b whereby the inner pressure in the ink liquid chambers 45 is raised.

The ink flow duct 46 is connected to the ink outlet duct 34c of the connecting unit 26, and is supplied with the ink 2 from the ink cartridge 11 connected to the connecting unit 26. The ink flow duct forms a flow passage for delivery of the ink 2 to each ink liquid chamber 45 communicating with the ink flow duct 46. That is, the ink flow duct 46 communicates with the connecting unit 26. Hence, the ink 2 supplied from the ink cartridge 11 flows into the ink flow duct 46 so as to be charged into the ink liquid chamber 45.

The aforementioned sole head chip 27 includes 100 to 5000 ink liquid chambers 45 for each color ink cartridge 11 provided with the paired heating resistors 42a, 42b. The paired heating resistors 42a, 42b are provided to each ink liquid chamber 45. In the head chip 27, the paired heating resistors 42a, 42b are selected and generate heat under a command from a controller 68 of the printer apparatus 1. The ink 2 contained in the ink liquid chamber 45, associated with the heated paired heating resistors 42a, 42b, is emitted as liquid droplets from the nozzle 44a associated with the ink liquid chamber 45.

That is, in the head chip 27, the ink 2 supplied from the ink flow duct 46 coupled to the head chip 27, is charged into the ink liquid chamber 45. The pulse current is caused to flow through the paired heating resistors 42a, 42b for a short time, for example, for 1 to 3 µsec, for quickly heating the paired heating resistors 42a, 42b, as a result of which the portion of the ink 2 in contact with the paired heating resistors 42a, 42b is heated to generate ink bubbles in the gaseous phase. Thus, a certain volume of the ink 2 is pressurized by the expansion of the ink air bubbles (ebullition of ink 2). Hence, the ink 2 in contact with the nozzle 44a is emitted in a quantity equivalent to the volume of the ink 2, pressurized by the expanded ink air bubbles, so as to be deposited as ink liquid droplet i on the recording paper sheet P.

In this head chip 27, the paired heating resistors 42a, 42b are arranged side-by-side, approximately parallel to each other, in the sole ink liquid chamber 45, as shown in Fig.8. That is, the paired heating resistors 42a, 42b are provided in the sole ink liquid chamber 45. In the head chip 27, a plural number of the paired heating resistors 42a, 42b, arranged parallel to each other, are arranged side-by-side in the direction substantially orthogonal to the running direction of the recording paper sheet P, indicated by arrow C in Fig.8, that is, in the width-wise direction of the recording paper sheet P, as indicated by arrow W in Fig.8. Meanwhile, the location of the nozzle 44a is indicated by a chain-dotted line in Fig.8.

The paired heating resistors 42a, 42b are each a division in two of a sole resistor, with the length being the same and the width being halved, so that the resistance value of each resistor is approximately doubled. If the resistors of the paired heating resistors 42a, 42b are connected in series, two resistors each having the resistance value doubled, are connected in series, so that the resistance value is four times that prior to division.

In order for ebullition of the ink 2 to occur in the ink liquid chamber 45, the paired heating resistors 42a, 42b need to be heated by applying a constant pulse current to the paired heating resistors 42a, 42b, so that the ink droplets i will be emitted by the energy generated by ebullition. If the resistance value is small, it is necessary to increase the pulse current caused to flow. Since resistance value of the paired heating resistors 42a, 42b, equivalent to a sole resistor divided in two portions, is higher than that of the undivided sole resistor, ebullition may be produced with the pulse current of a small current value.

In this manner, in the head chip 27, the size of e.g. transistors, through which the pulse current is caused to flow, may be reduced to save space. Although the resistance value may further be raised by reducing the thickness of the paired heating resistors 42a, 42b, there is a certain limit imposed on reducing the thickness of the paired heating resistors 42a, 42b, from the perspective of strength or durability and the material selected of the paired heating resistors 42a, 42b,. For this reason, the resistance value of the paired heating resistors 42a, 42b is increased by dividing the sole resistor in two, instead of by reducing their thicknesses.

It should be noted that, in emitting the ink in the ink liquid chamber 45 through the nozzle 44a, the ink droplet i may be emitted vertically downward from the nozzle 44a by driving controlling the paired heating resistors 42a, 42b so that the time until ebullition of the ink in the ink liquid chamber 45 by the paired heating resistors 42a, 42b, that is, the time duration for air bubble generation, will be the same for the paired heating resistors.

If time difference is produced in the air bubble generation time duration of the paired heating resistors 42a, 42b, it becomes difficult to generate ink bubbles at about the same time by the paired heating resistors 42a, 42b, with the result that the ink droplets are emitted with an offset towards one of the arraying directions of the paired heating resistors 42a, 42b.

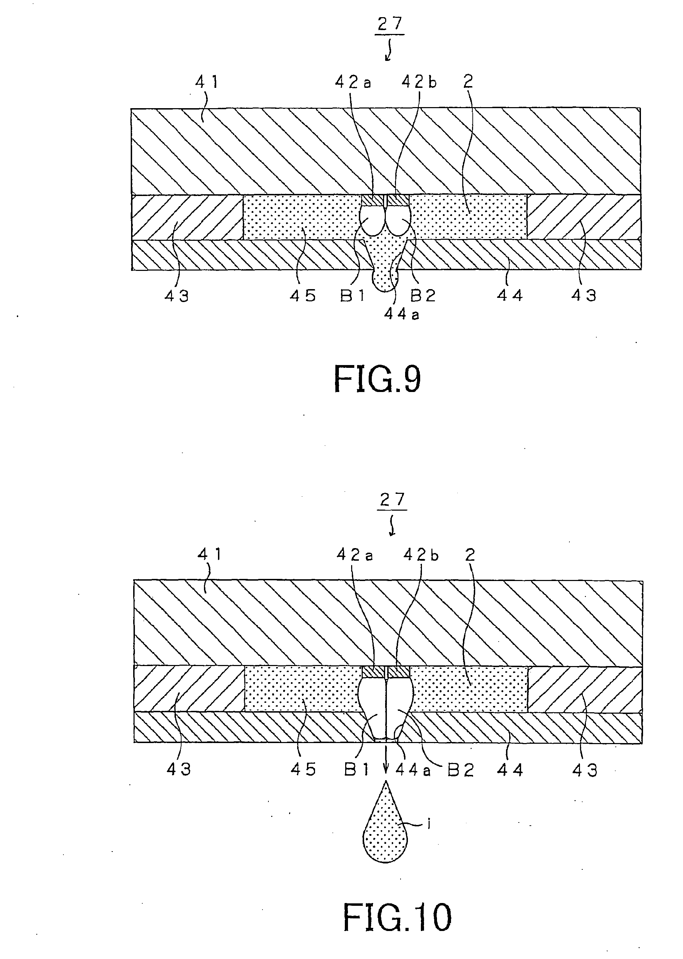

Specifically, the ink 2 is supplied by the ink flow duct 46, coupled to the head chip 27, so that the ink 2 is charged in the ink liquid chamber 45, as shown in Fig.9. The pulse currents of the same current value are caused to flow approximately simultaneously, so that the paired heating resistors 42a, 42b are heated quickly, as a result of which gaseous ink air bubbles B1, B2 are generated in the portions of the ink 2 contacted with the paired heating resistors 42a, 42b. These ink air bubbles B1, B2 are expanded to pressurize the ink 2 of a preset volume. Hence, in the head chip 27, the ink 2 of the same volume as the ink 2 pressurized substantially vertically by the ink air bubbles B1, B2 in the portion of the ink contacted with the nozzle 44a is emitted substantially vertically from the nozzle 44a, as ink liquid droplet i, so as to be deposited on the recording paper sheet P, as shown in Fig.10.

In the explanation to follow, it is assumed that the ink air bubbles B1 and B2 are formed on the heating resistors 42a and 42b, respectively.

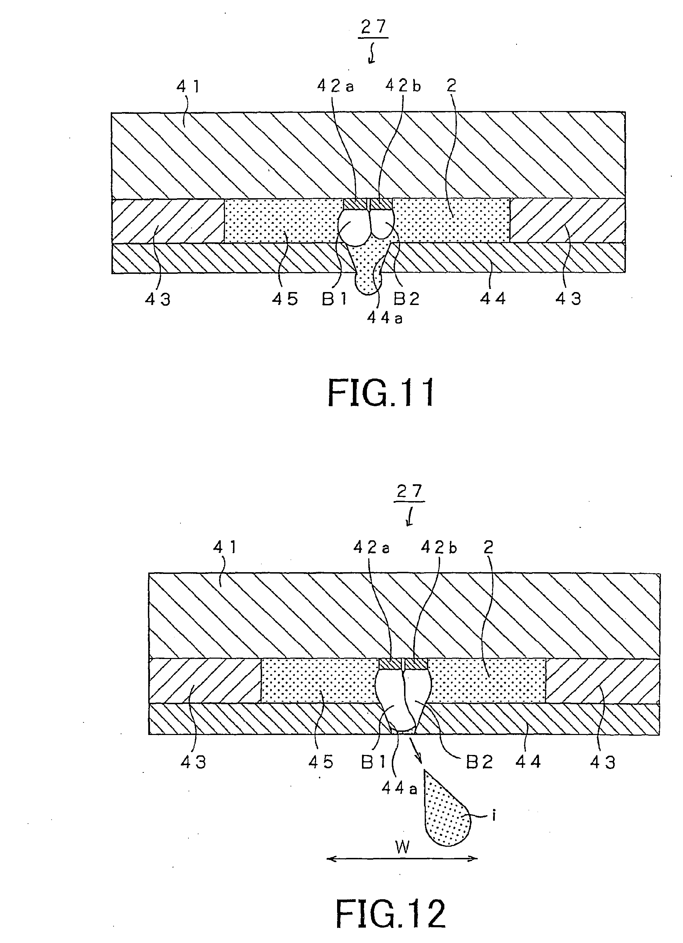

Moreover, with the head chip 27, ink air bubbles B 1 and B2 of different sizes are generated in the portions of the ink 2 contacted with the heating resistors 42a and 42b, by supplying the pulse currents of the different values to the paired heating resistors 42a, 42b approximately simultaneously, as shown in Fig.11. By expansion of these ink air bubbles B1 and B2, the ink 2 of a preset volume is pressurized. Thus, in the head chip 27, the same volume of the ink 2 as that of the ink 2 pressurized by the ink air bubbles B1 and B2 in the ink portion contacted by the nozzle 44a is emitted as ink liquid droplet i from the nozzle 44a, with an offset towards one with a smaller volume of the ink air bubbles B1 and B2, along the width-wise direction of the recording paper sheet P, as indicated by arrow W in Fig.12, so as to be deposited on the recording paper sheet P, as shown in Fig.12. It may be seen that Fig.12 shows that the volume of the ink air bubble B1, formed on the heating resistor 42a, has become larger than that of the ink air bubble B2 formed on the heating resistor 42b.

With the above-described head chip 27, since the ink 2, containing the surfactant, containing in turn at least the organic compound having the above-mentioned chemical formula 1, is supplied to the ink liquid chamber 45, there is little risk that bubbles other than the ink air bubbles B1, B2 formed by the paired heating resistors 42a, 42b are generated in the ink 2 in the ink liquid chamber 45, with the result that it is possible to prohibit an inconvenience that an air bubble generated in the ink in the ink liquid chamber obstructs supply of the ink onto the heating resistor or emission of the ink from the nozzle.

With the head chip 27, since the ink 2 supplied to the ink liquid chamber 45 contains the surfactant, containing in turn at least the organic compound having the above-mentioned chemical formula 1, and the ink 2 exhibits superior wetting performance not only to the recording paper sheet P but also to the inner peripheral surface of the ink liquid chamber 45, paired heating resistors 42a, 42b or to the nozzle 44a, the ink 2 may be supplied promptly to the paired heating resistors 42a, 42b right after emitting the ink liquid droplet i from the nozzle 44a. Hence, with the present head chip 27, the ink 2 may be supplied quickly to the paired heating resistors 42a, 42b each time the ink liquid droplet i is emitted. That is, since the ink 2 is supplied properly at all times into the ink liquid chamber 45, the ink liquid droplet i may be properly emitted from the nozzle 44a even though the ink liquid droplet i is emitted at short emission time intervals.

Furthermore, with the present head chip 27, the ink 2 supplied to the ink liquid chamber 45 contains a surfactant containing in turn at least the organic compound having the above-mentioned chemical formula 1, and the surfactant has the cloud point of approximately 80°C which is higher than that of the conventional surfactant, there is little risk that the temperature of the ink 2, heated by the paired heating resistors 42a, 42b, exceeds the cloud point of the surfactant, with the consequence that the ink undergoes changes in physical properties.

Thus, with the present head chip 27, the temperature of the ink 2 in the ink liquid chamber 45 is not liable to exceed the cloud point of the surfactant, and the physical properties of the ink 2 are stabilized, such that wettability of the ink 2 for the inner peripheral surface, paired heating resistors 42a, 42b or the nozzle 44a may be maintained, with the result that the ink liquid droplet i may be emitted properly from the nozzle 44a.

The printer main 4, constituting the printer apparatus 1, on which is mounted the head cartridge 3, formed as described above, will now be explained with reference to the drawings.

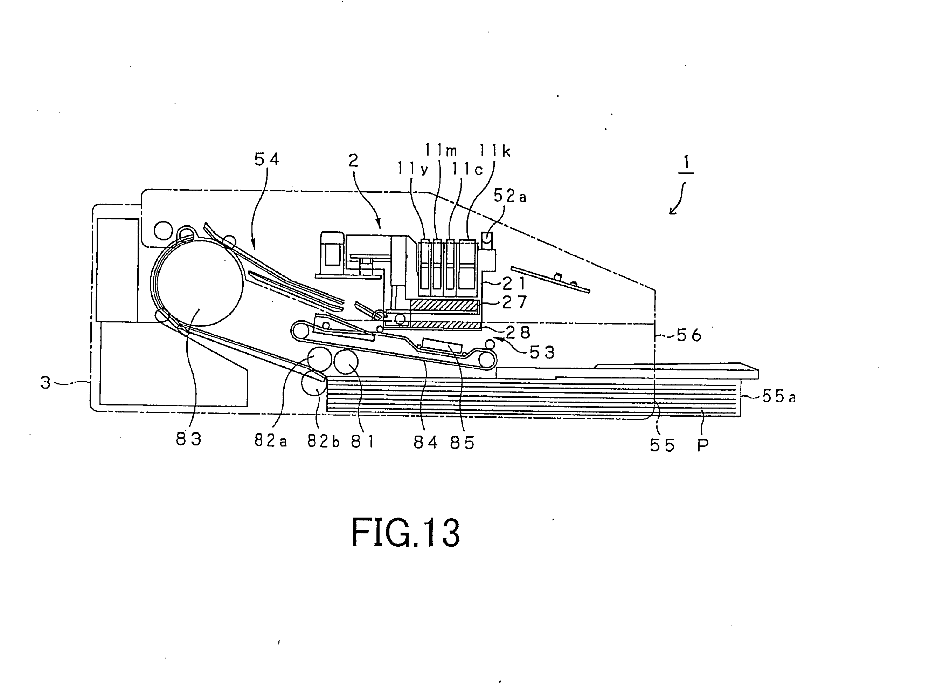

Referring to Figs.1 and 13, the printer main 4 includes a head cartridge mounting unit 51, on which is loaded the head cartridge 3, a head cartridge holding unit 52 for holding and securing the head cartridge 3 to the head cartridge mounting unit 51, a head cap opening/ closing unit 53, for opening/ closing the head cap, and a paper sheet feed/ discharge unit 54, for supplying and discharging the recording paper sheet P. The printer main 4 also includes a paper sheet feed port 55 for supplying the recording paper sheet P to the paper sheet feed/ discharge unit 54, and a paper sheet discharge port 56 for outputting the recording paper sheet P from the paper sheet feed/ discharge unit 54.

The head cartridge mounting unit 51 is a recess within which is mounted the head cartridge 3. The head cartridge 3 is mounted so that, for printing data correctly on the running paper sheet, the emitting surface 27a of the head chip 27 will be substantially parallel to the plane of the recording paper sheet P.

There are occasions wherein the head cartridge 3 needs to be replaced by e.g. the ink stopping up the head chip 27. Hence, the head cartridge 3 is a consumable item, although it is not to be exchanged so often as the ink cartridge 11. Hence, the head cartridge is held by the head cartridge holding unit 52 so as to be dismounted as desired from the head cartridge mounting unit 51.

The head cartridge holding unit 52 is a unit which detachably holds the head cartridge 3 with respect to the head cartridge mounting unit 51. A knob 52a provided to the head cartridge 3 is retained by a biasing member, such as a spring, not shown, provided in a retention opening 52b of the printer main 4. This fits the head cartridge 3 by pressure fit against a reference plane 4a provided to the printer main 4, thereby positioning and fixing the head cartridge 3.

The head cap opening/ closing unit 53 includes a driving unit for opening/closing the head cap 28 of the head cartridge 3. For printing, the head cap 28 is opened for exposing the head chip 27 to the recording paper sheet P and, when the printing has come to a close, the head cap 28 is closed to protect the head chip 27.

The paper sheet feed/ discharge unit 54 includes a driving unit for transporting the recording paper sheet P. The driving unit transports the recording paper sheet P, supplied from the paper sheet feed port 55, to the head chip 27 of the head cartridge 3, while transporting the printed paper sheet P to the paper sheet discharge port 56 to discharge it to outside the apparatus, as the ink droplets i, emitted from the nozzle 44a, remain deposited thereon. The paper sheet feed port 55 is an opening for feeding the recording paper sheet P to the paper sheet feed/discharge unit 54, and is able to hold a stack of plural recording paper sheets P on e.g. a tray 55a. The paper sheet discharge port 56 is an opening via which is discharged the recording paper sheet P on which the ink droplets i have become deposited to finish the printing.

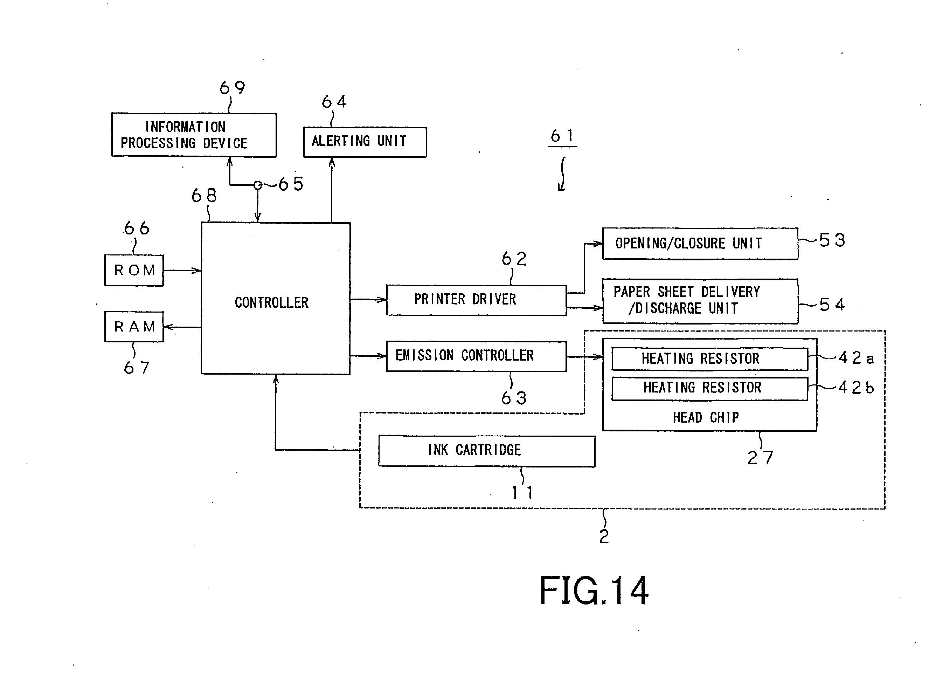

A control circuit 61, controlling the printing by the printer apparatus 1, constructed as described above, and shown in Fig.14, will now be explained with reference to the drawings.

The control circuit 61 includes a printer driver 62, for driving controlling the units 53 and 54 of the printer main 4, an emission controller 63 for controlling e.g. the current supplied to the head chip 27 associated with the inks 4 of different colors, and an alerting unit 64 for alerting the residual quantity of the inks 4 of different colors. The control circuit also includes an input/output terminal 65 for inputting/ outputting signals for an external device, and a ROM (read-only memory) 66 having recorded e.g. a control program. The control circuit further includes a RAM (random-access memory) 67 transiently storing e.g. a control program for reading out as necessary, and a controller 68 for controlling various parts.

The printer driver 62 controls the head cap opening/closing unit for opening/closing the head cap 28 by actuating a driving motor constituting the head cap opening/ closing unit 53 based on the control signal from the controller 68.

The printer driver 62 also actuates a driving motor, constituting the paper sheet feed/ discharge unit 54, based on a control signal from the controller 68, to feed the recording paper sheet P from the paper sheet feed port 55 of the printer main 4, to discharge the paper sheet P from the paper sheet discharge port 56.

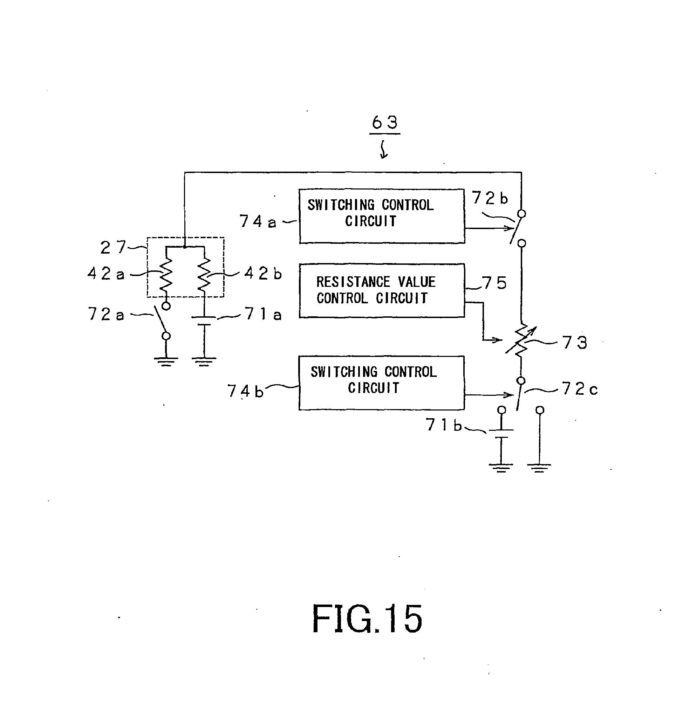

Referring to Fig.15, the emission controller 63 is an electrical circuit including power sources 71 a, 71b for supplying pulse current to the paired heating resistors 42a, 42b, which are resistor elements, switch devices 72a to 72c, for turning the electrical connection between the paired heating resistors 42a, 42b and the power sources 71a, 71b on or off, and a variable resistor 73 for controlling the pulse currents supplied to the paired heating resistors 42a, 42b. The emission controller also includes switching control circuits 74a, 74b for controlling the switching of the switch devices 72b and 72c, and a resistance value control circuit 75 for controlling the resistance value of the variable resistor 73.

The power source 71a is connected to the heating resistor 42b, while the power source 71b is connected via switch device 72c to the variable resistor 73. Both the power sources supply the pulse current to the electrical circuit. Meanwhile, although the pulse current supplied to the electrical circuit may be supplied from the power sources 71a, 71 b, the pulse current may also be directly supplied from for example the controller 68.

The switch device 72a is arranged between the paired heating resistor 42a and the ground to control the on/off of the emission controller 63 in its entirety. The switch device 72b is connected across the paired heating resistors 42a, 42b and the variable resistor 73 to control the pulse current supplied to the paired heating resistors 42a, 42b.

The switch device 72c is arranged between the variable resistor 73 and the power source 71b to control the direction of emission of the ink droplet i. These switch devices 72a to 72c are on/off controlled to control the pulse current supplied to the electrical circuit.

The variable resistor 73 varies its own resistance value to change the current value of the pulse current supplied to the heating resistor 42a. That is, the current value of the pulse current, supplied to the heating resistor 42a, is determined by the magnitude of the resistance of the variable resistor 73.

The switching control circuit 74a changes over the on/off of the switch device 72b to connect the variable resistor 73 to the paired heating resistors 42a, 42b or turns off the variable resistor 73 and the paired heating resistors 42a, 42b. The switching control circuit 74b changes over the on/off of the switch device 72c to change over the on/off of the electrical connection across the power source 71 b and the electrical circuit.

The resistance value control circuit 75 controls the magnitude of the resistance value of the variable resistor 73 to adjust the value of the pulse current supplied to the heating resistor 42a.

If, in the above-described emission controller 63, the switch device 72b is turned off, with there being no electrical connection across the variable resistor 73 and the paired heating resistors 42a, 42b, and the switch device 72a is turned on, the pulse current is supplied from the power source 71 a to the series-connected paired heating resistors 42a, 42b. At this moment, no current flows through the variable resistor 73. If the resistance values of the paired heating resistors 42a, 42b are approximately equal to each other, the heat values generated by the paired heating resistors 42a, 42b when the pulse current is supplied thereto, is approximately equal to each other.

In this case, the heat values generated in the paired heating resistors 42a, 42b in the head chip 27 become approximately equal to each other, and the time duration of air bubbles, that is, the air bubble generation timing, become approximately equal to each other. Since the air bubbles of approximately the same volume are generated on the paired heating resistors 42a, 42b, the angle of emission of the ink 2 is approximately orthogonal to the major surface of the recording paper sheet P, with the ink droplet i being emitted substantially directly downwards from the nozzle 44a.

In the emission controller 63, shown in Fig.15, in case the switch device 72b has turned on the electrical connection between the paired heating resistors 42a, 42b and the variable resistor 73, the switch device 72a is turned on, and the switch device 72c is connected to the ground, the ink droplet i, emitted from the head chip 27, is emitted as the emitting direction is offset towards the heating resistor 42a along the width-wise direction W of the recording paper sheet P, as shown in Fig.16B. That is, since the switch device 72c is connected to the ground, the current value of the pulse current supplied to the heating resistor 42a becomes smaller in proportion to the resistance value of the variable resistor 73. Since the ink air bubbles B1 and B2 are formed on the paired heating resistors 42a, 42b, respectively, as the volume of the ink air bubble B 1 has become smaller than that of the ink air bubble B2, the ink liquid droplet i is emitted obliquely from the nozzle 44a as the angle of emission of the ink 2 is offset towards the heating resistor 42a.

In this emission controller 63, the current value of the pulse current, supplied to the heating resistor 42b is unchanged, while the current value of the pulse current supplied to the heating resistor 42a is changed. In this case, if the resistance value of the variable resistor 73 is high, the current flowing to the ground from the power source 71 a through the switching device 72c becomes small, with the result that the amount of decrease of the pulse current supplied from the power source 71 a to the heating resistor 42a is small. Hence, the difference of the pulse currents supplied to the paired heating resistors 42a, 42b becomes smaller, with the difference in the heat values generated by the paired heating resistors 42a, 42b becoming smaller and with the angle of emission of the ink liquid droplet i from the nozzle 44a, with the emitting surface 27a as reference, becoming larger. That is, the larger the resistance value of the variable resistor 73, the closer on the side of the heating resistor 42a becomes the point of deposition of the ink liquid droplet i to the point of deposition D for the ink liquid droplet i emitted substantially directly downward from the nozzle 44a. If conversely the resistance value of the variable resistor 73 is low, the current flowing to the ground from the power source 71 a through the switching device 72c becomes larger, such that the amount of decrease of the pulse current supplied from the power source 71a to the heating resistor 42a is increased. Hence, the difference of the pulse currents supplied to the paired heating resistors 42a, 42b becomes larger, with the difference in the heat values generated by the paired heating resistors 42a, 42b becoming smaller and with the angle of emission of the ink liquid droplet i from the nozzle 44a, with the emitting surface 27a as reference, becoming smaller. That is, the smaller the resistance value of the variable resistor 73, the remoter on the side of the heating resistor 42a becomes the point of deposition of the ink liquid droplet i to the point of deposition D for the ink liquid droplet i emitted substantially directly downward from the nozzle 44a.

If, in the emission controller 63, shown in Fig.15, the switching device 72b has turned on the connection between the paired heating resistors 42a, 42b and the variable resistor 73, the switching device 72a is turned on and the switching device 72c is connected to the power source 71b, the ink liquid droplet i, emitted from the head chip 27, is emitted as its direction of emission has been changed towards the heating resistor 42b along the width-wise direction of the recording paper sheet P shown in Fig.16C. That is, since the switching device 72c is connected to the power source 71 b, the current value of the pulse current supplied to the heating resistor 42a becomes larger in proportion to the resistance value of the variable resistor 73, and hence the ink air bubbles B1 and B2 are formed on the paired heating resistors 42a, 42b as the ink air bubble B2 has become smaller in volume than the ink air bubble B1. Hence, the ink liquid droplet i is emitted substantially obliquely from the nozzle 44a as the angle of emission of the ink 2 is offset towards the heating resistor 42b. In the head chip 27, the heating state of the paired heating resistors 42a, 42b is reversed from that in case the switching device 72c is connected to the ground. If, in this case, the resistance value of the variable resistor 73 is high, the pulse current supplied to the heating resistor 42a from the power source 71 b, in addition to the current supplied from the power source 71 a, becomes smaller, so that the difference of the pulse currents supplied to the paired heating resistors 42a, 42b becomes smaller, with the difference in the heating values between the paired heating resistors 42a, 42b also becoming smaller. Hence, the angle of emission of the ink liquid droplet i from the nozzle 44a, with the emitting surface 27a as a reference, becomes larger. That is, the higher the resistance of the variable resistor 73, the closer becomes the point of deposition of the ink liquid droplet i on the side of the heating resistor 42b to the point of deposition D for the ink liquid droplet i emitted substantially vertically downward from the nozzle 44a.

If, on the other hand, the resistance value of the variable resistor 73 is low, the pulse current supplied to the heating resistor 42a from the power source 71b, in addition to the current supplied from the power source 71a, becomes larger, so that the difference of the pulse currents supplied to the paired heating resistors 42a, 42b becomes larger, with the difference in the heating values between the paired heating resistors 42a, 42b also becoming larger. Hence, the angle of emission of the ink liquid droplet i from the nozzle 44a, with the emitting surface 27a as a reference, becomes smaller. That is, the lower the resistance of the variable resistor 73, the remoter becomes the point of deposition of the ink liquid droplet i on the side of the heating resistor 42b to the point of deposition D for the ink liquid droplet i emitted substantially vertically downward from the nozzle 44a.

Thus, with the emission controller 63, the switching devices 72a to 72c may be changed over and the resistance value of the variable resistor 73 may also be changed to change the direction of emission of the ink liquid droplet i from the nozzle 44a along the arraying direction of the paired heating resistors 42a, 42b, that is, along the width-wise direction of the recording paper sheet P.

In the foregoing, the current value supplied to the heating resistor 42a is adjusted by controlling the resistance value of the variable resistor 73. However, this is not limitative of the present invention. For example, the power source 71a may be connected to the heating resistor 42a to vary the current value supplied to the heating resistor 42b.

The alerting unit 64, shown in Fig.14, is a display means, such as LCD (liquid crystal display), and demonstrates the information, such as printing conditions, printing states or the residual ink quantities. The alerting unit 64 may, for example, be voice outputting means, such as a loudspeaker, in which case the information of, for example, the printing conditions, printing states or the residual ink quantities, is output by voice. Meanwhile, the alerting unit 64 may own both the display means and the voice outputting means. The alerting may also be made using a monitor or a loudspeaker of an information processing system 69.

The input/output terminal 65 sends the above information, such as printing conditions, printing states or the residual ink quantities, to for example the external information processing system 69 over an interface. The input/output terminal 65 is also supplied with a control signal for outputting the above information, such as printing conditions, printing states or the residual ink quantities, or with e.g. printing data from e.g. the external information processing system 69. The information processing system 69 is an electronic apparatus, such as, for example, a personal computer or a PDA (Personal Digital Assistance).

The input/output terminal 65, connected to for example the information processing system 69, may use, for example, a serial interface or a parallel interface, as interface, and is conformant to existing standards, specifically, the standards for USB (Universal Serial Bus), RS (Recommended Standard) 232C or IEEE (Institute of Electrical and Electronic Engineers) 1394.

The input/output terminal 65 may be configured to perform data communication with the information processing system 69 in accordance with a wired or wireless communication system. The relevant wireless communication standards may include IEEE802.11a, 802.11b and 802.11g.

Between the input/output terminal 65 and the information processing system 69 may be interposed a network, such as the Internet. In this case, the input/output terminal 65 is connected to for example LAN (Local Area Network), ISDN (Integrated Services Digital Network), xDSL (Digital Subscriber Line), FTHP (Fiber to The Home), CATV (Community Antenna Television) or BS (Broadcasting Satellite). Data communication is carried out in accordance with various protocols, such as TCP/IP (Transmission Control Protocol/ Internet Protocol).

A ROM 66 is a memory, such as EP-ROM (Erasable Programmable Read-Only Memory), having stored therein a variety of programs for processing carried out by the controller 68. The programs stored in the ROM may be loaded on the RAM 67 by the controller 68. The RAM 67 stores the programs, read out by the controller 68 from the ROM 66, and the various states of the printer apparatus.

The controller 68 controls various components, based on for example the printing data, supplied from the input/output terminal 65, or on data on the residual quantity of the ink 2, entered from the head cartridge 3. The control programs for controlling various components, based on for example the control signal as entered, are read out from the ROM 66, under control by the controller 68, and stored in the RAM 67, and various components are controlled or processed based on the processing program.

That is, the controller 68 controls the emission controller 63, based on for example the processing program, so that the current value difference of the pulse current flowing through the heating resistor 42a from that flowing through the heating resistor 42b will be within ±10%, such as not to produce variations in the emitting directions of the ink droplets i emitted from the nozzles 44a.

In the above-described control circuit 61, the processing programs are stored in the ROM 66. However, the processing programs do not have to be stored in the ROM 66, and a variety of recording mediums, such as optical discs, magnetic disc, magneto-optical discs or IC cards, having the processing programs stored therein, may also be used. The control circuit 61 is arranged so that it is connected to a drive for driving various recording mediums, either directly or via information processing system 69, to read out processing programs from these recording mediums.

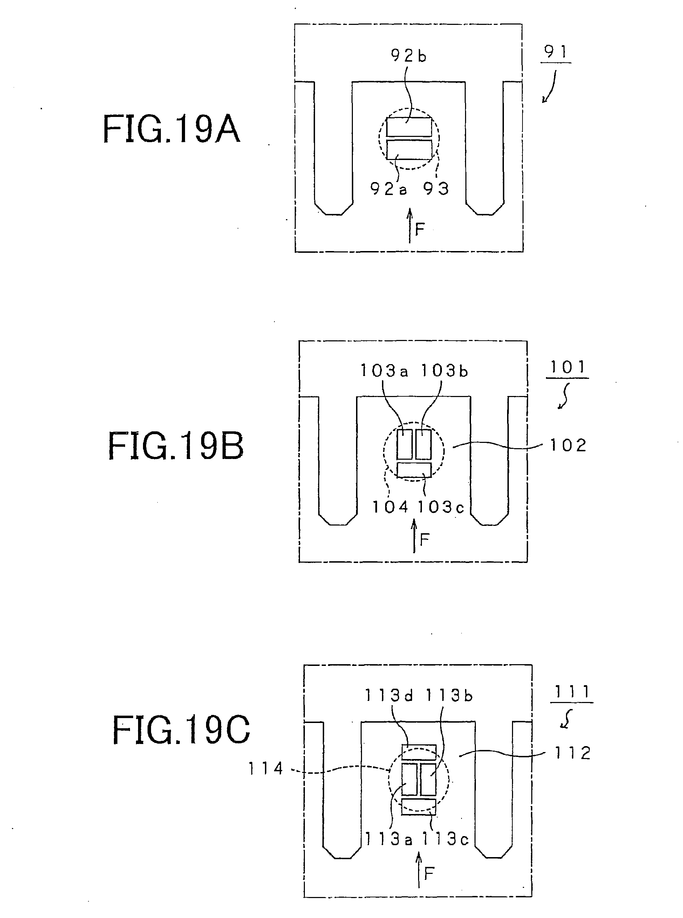

The printing operation of the printing apparatus 1, arranged as described above, will now be explained with reference to the flowchart shown in Fig.19. Meanwhile, the present printing operations are carried out by arithmetic processing on a CPU (Central Processing Unit), not shown, provided in the controller 68, based on a processing program stored in storage means, such as ROM 66.

Initially, a user operates an operating panel, provided to the printer main 4, and issues a command to the printer apparatus 1 to carry out the printing operations. The controller 68 then verifies, in a step S1, whether or not ink cartridges 11 of preset colors have been mounted to the respective mounting units 22.

If the ink cartridges 11 of preset colors have been adequately mounted to all of the mounting units 22, the controller 68 proceeds to a step S2. In case the ink cartridges 11 of preset colors have not been adequately mounted on the mounting unit 11, the controller 68 proceeds to a step S4 to inhibit the printing.

The controller 68 in the step S2 verifies whether or not the quantity of the ink 2 in the connecting unit 26 is lesser than a preset value, that is, whether or not the ink 2 has become depleted. In case it is found that the ink 2 has become depleted, that effect is alerted in the alerting unit 64. The printing operation is then inhibited in the step S4. If conversely the quantity of the ink 2 in the connecting unit 26 is in excess of a preset value, that is, if the ink 2 has been charged, the printing operation is allowed in a step S3.

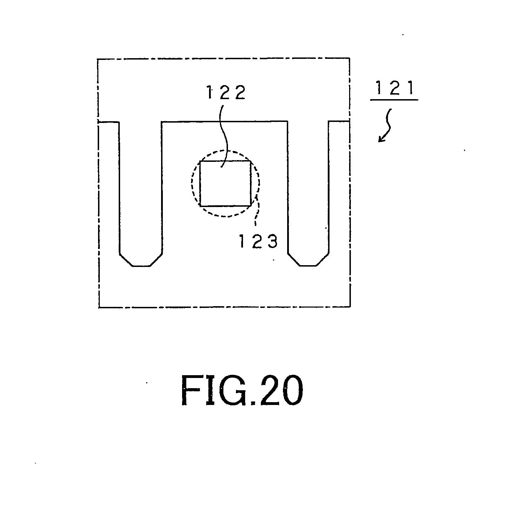

In effecting the printing, the controller 68 performs driving control of the driving units 53 and 54 by the printer controller 62 to cause movement of the recording paper sheet P to a printing enabling position. Specifically, the controller 68 drives a driving motor of the head cap opening/ closing unit 53 to cause movement of the head cap 28 towards the tray 55a with respect to the head cartridge 3 to expose the nozzles 44a of the head chip 27, as shown in Fig.20.

The controller 68 drives a driving motor, forming the paper sheet feed/discharge unit 54, to cause the running of the recording paper sheet P. Specifically, the controller 68 controls the paper sheet feed/ discharge unit 54 so that a recording paper sheet P is pulled out from the tray 55a by the paper sheet feed roll 81 and sent to the inverting roll 83 by a pair of separating rolls 82a, 82b, rotating in opposite directions, the recording paper sheet P is then sent to a transporting belt 84, and the recording paper sheet P, transported to the transporting belt 84, is retained at a preset position by a retention means 85 to determine the position of deposition of the ink 2.

When the controller 68 has verified that the recording paper sheet P has been retained in the printing position, the controller 68 controls the emission controller 63 for emitting the ink droplets i towards the recording paper sheet P from the nozzles 44a of the head chip 27. Specifically, the controller controls the emission controller 63 so that, in case the ink droplet i is to be emitted substantially vertically downward from the nozzle 44a, the current values of the pulse currents supplied to the paired heating resistors 42a, 42b will be approximately equal to each other, as shown in Fig.16A. If, in emitting the ink from the nozzle 44a, the direction of the ink emission is varied so that the ink will be emitted offset towards the heating resistor 42a, the controller 68 controls the emission controller 63 so that the current value of the pulse current supplied to the heating resistor 42a will be smaller than that of the pulse current supplied to the heating resistor 42b, as shown in Fig.16B. I, in emitting the ink from the nozzle 44a, the ink is to be emitted offset towards the heating resistor 42b, the controller 68 controls the emission controller 63 so that the current value of the pulse current supplied to the heating resistor 42a will be larger than that of the pulse current supplied to the heating resistor 42b, as shown in Fig.16C.

Thus, in case the ink droplet i has been emitted from the nozzle 44a, the same quantity of the ink 2 as the emitted quantity of the ink droplets i is quickly replenished from the ink flow duct 46 into the ink chamber 45 to restore the original state, as shown in Fig.6B.

When the ink droplet i is emitted from the head chip 27, and the negative pressure of the ink 2 in the portion of the ink chamber 34 located towards the ink outlet duct 34c, that is, towards the opening 34d, is raised, the diaphragm 34i is uplifted by atmospheric pressure, under the negative pressure of the ink 2. This uplifts the valve 34e, which has so far closed the opening 34d of the ink chamber 34b by the biasing force of the biasing member 34f and that of the diaphragm 34i, against the biasing force of the biasing member 34f, along with the valve shaft 34h, as shown in Fig.6A. At this moment, the opening 34d between the side of the ink inlet duct 34a and the side of the ink outlet duct 34c of the ink chamber 34b is opened, so that the ink 2 is supplied from the side of the ink inlet duct 34a to the side of the ink outlet duct 34c. The ink 2 is replenished in the ink flow duct 46 of the head chip 27. The negative pressure of the ink 2 is lowered and the diaphragm 34i is restored to its original shape, by its force of restoration. The valve 34e is pulled down, along with the valve shaft 34h, by the biasing force of the biasing member 34f, such as to close the ink chamber 34b. In the valving unit 34, the above-described sequence of operations is repeated when the negative pressure of the ink 2 is raised each time the ink droplet i is emitted.

In this manner, the letters/ characters or images, which are in keeping with the printing data, are sequentially printed on the recording paper sheet P which is being run by the paper sheet feed/ discharge unit 54. On completion of the printing, the recording paper sheet P is discharged via paper sheet discharge port 56 by the paper sheet feed/ discharge unit 54.

In the above-described printer apparatus 1, the ink 2, at least containing a surfactant, in turn containing the organic compound represented by the above chemical formula 1, is contained in the ink cartridge 11, this ink 2 being emitted as ink liquid droplet i via nozzle 44a onto the recording paper sheet P. Since the ink 2 exhibits superior wettability for the recording paper sheet P and promptly penetrates into the bulk of the recording paper sheet P along the direction of its thickness, printing may be made to high image quality without causing bleeding at the point of deposition of the ink liquid droplet i. Specifically, even in case plain paper sheets, such as copy paper sheets, bond paper sheets or report paper sheets, are used as the recording paper sheet P, it is possible to suppress the deposited ink liquid droplet i from becoming bled along the fibers of the plain paper sheets.

In the printer apparatus 1 of the present invention, the ink 2 exhibiting superior wettability for the recording paper sheet P is emitted from the nozzle 44a as ink liquid droplets i for printing on the recording paper sheet P, and hence the ink liquid droplet i deposited seeps quickly into the bulk of the recording paper sheet P so as to be there dried in situ. As a result, even if the printed portion of the recording paper sheet is scrubbed directly after printing, there is no risk of the point of deposition of the ink liquid droplet i becoming blurred to degrade the image quality.

With the present printing apparatus 1, in which the ink 2, at least containing the surfactant, containing in turn the organic compound represented by the above chemical formula 1, is contained in the ink cartridge 11, and in which this ink 2 is supplied into the ink liquid chamber 45, it is possible to prevent bubbles, other than the ink air bubbles B 1 or B2, from being generated in the ink 2 in the ink liquid chamber 45. Thus, with the present printer apparatus 1, there is no fear that bubbles generated in the ink in the ink liquid chamber interfering with supply of the ink onto the heating resistors or with emission of the ink from the nozzle, thus assuring proper emission of the ink liquid droplet i from the nozzle 44a.

In the printer apparatus 1 of the present invention, the ink 2 supplied to the ink liquid chamber 45 exhibits superior wettability not only for the recording paper sheet P but also for the inner peripheral surface of the ink liquid chamber 45, paired heating resistors 42a, 42b or the nozzle 44a. Hence, the ink 2 may promptly be supplied from the nozzle 44a onto the paired heating resistors 42a, 42b. Thus, with the present printer apparatus 1, the ink 2 can be quickly supplied to the paired heating resistors 42a, 42b each time the ink liquid droplet i is emitted from the nozzle 44a, so that, even when ink liquid droplets i are emitted at short emitting intervals, these ink liquid droplets i may be properly emitted from the nozzle. That is, with the present printer apparatus 1, the ink 2 can be adequately emitted via nozzle 44a at each opportunity for emission, even if the printing speed is raised, thus assuring printing to high image quality.

In the printer apparatus 1 of the instant embodiment, the ink 2, accommodated in the ink cartridge 11, at least contains the surfactant, in turn containing the organic compound represented by the above chemical formula 1. This surfactant has a cloud point as high as 80°C which is higher than that of the conventional surfactant. Consequently, there is no fear that, when the ink 2 is heated by the paired heating resistors 42a, 42b, the ink 2 is heated to a temperature higher than the cloud point of the surfactant, thus possibly affecting the physical properties of the ink. Hence, with this printer apparatus 1, the temperature of the ink 2, supplied from the ink cartridge 11 and contained in the ink liquid chamber 45, scarcely exceeds the cloud point of the surfactant, with the ink 2 exhibiting stabilized physical properties. Consequently, the ink 2 may retain its wettability for the inner peripheral surface of the ink liquid chamber 45, paired heating resistors 42a, 42b or the nozzle 44a, such that the ink liquid droplets i may properly be emitted via nozzle 44a.

In the foregoing, the head chip 27, in which a pair of the heating resistors 42a, 42b are arrayed along the transverse direction of the recording paper sheet P, has been taken as an example for explanation. However, this is not limitative of the present invention. The present invention may be applied to the head chips 91, 101 and 111, shown in Figs.19A to 19C, provided that the direction of emission of the ink liquid droplets i is controlled by varying the current values of the pulse currents supplied to the plural pressure generating devices.

Meanwhile, in the head chip 91, paired heating resistors 92a, 92b are juxtaposed along the traveling direction of the recording paper sheet P. In the head chip 101, three heating resistors 103a, 103b and 103c are arranged in the ink liquid chamber 102 and, in the head chip 111, four heating resistors 113a, 113b, 113c and 113d are arranged in the ink liquid chamber 112.

In Figs.19A to 19C, the positions of the nozzles 93, 104 and 114 in the head chips 91, 101 and 111 are indicated by dotted lines. In the head chips 101, 111, the heating resistors 103c, 113c, provided on the ink flow duct side, are provided for preventing the situation in which the pressure for emitting the ink liquid droplet i via nozzles 104, 114 becomes higher on the ink flow duct side than on the sidewall side when the ink air bubbles generated in the ink liquid chambers 102, 112 have been broken, with the ink liquid droplet i being then emitted in a direction of supplying the ink 2 from the ink flow duct, that is, in a direction substantially opposite to the direction of arrow F in Figs.19A to 19C.

In the foregoing, the head chip 27, provided with a plural number of paired heating resistors 42a, 42b, has been taken as an example for explanation. However, the present invention is not limited to this configuration and may also be applied to a configuration in which only one heating resistor 122 is provided facing a nozzle 123, as in the case of the head chip 121 shown for example in Fig.20. In this case, the head chip 121 emits the ink liquid droplet i from the nozzle 123 only in a vertically downward direction, that is, in a direction approximately normal to the recording paper sheet P. In Fig.20, the position of the nozzle 123 in the head chip 121 is again indicated by a dotted line.

In the foregoing, a printer apparatus 1 in which the head cartridge 3 is detachably mounted to the printer main 4 and the ink cartridge 11 is detachably mounted to the head cartridge 3 is taken as an example for explanation. However, the present invention may also be applied to a printer apparatus in which the printer main 4 is unified to the head cartridge 3.

In the above embodiment, an electro-thermal conversion system of emitting the ink 2, heated by the paired heating resistors 42a, 42b, is used. The present invention is not limited to this embodiment and an electro-mechanical conversion system of emitting the ink electro-mechanically by an electro-mechanical conversion element, such as a piezo-electric device or piezo-device, may also be used.

Furthermore, in the above embodiment, the line printer apparatus 1 is taken as an example for explanation. However, the present invention is not limited to this embodiment and may also be applied to a serial ink jet printer apparatus in which an ink head is moved in a direction approximately normal to the traveling direction of the recording paper sheet P. In this case, at least a plural number of pressure generating devices are provided to a head chip of the serial ink jet printer apparatus.

In the following, actually prepared samples of the ink, as the recording liquid of the present invention, will now be explained.

### <Sample 1>

In a sample 1, 3 parts by weight of C.I. Acid Yellow 23, as a dye which proves a coloring agent, 76.95 parts by weight of water, as a solvent, 10 parts by weight of ethylene glycol, as another solvent, 10 parts by weight of diethylene glycol, as a further solvent, and 0.05part by weight of a surfactant, containing an organic compound, represented by the chemical formula 1 where the amount of addition of ethylene oxide (k+1) was set to 1 and the amount of addition of propylene oxide (m+n) was set to 3, were mixed together to prepare an ink precursor.

As the surfactant, containing the organic compound, represented by the chemical formula 1: 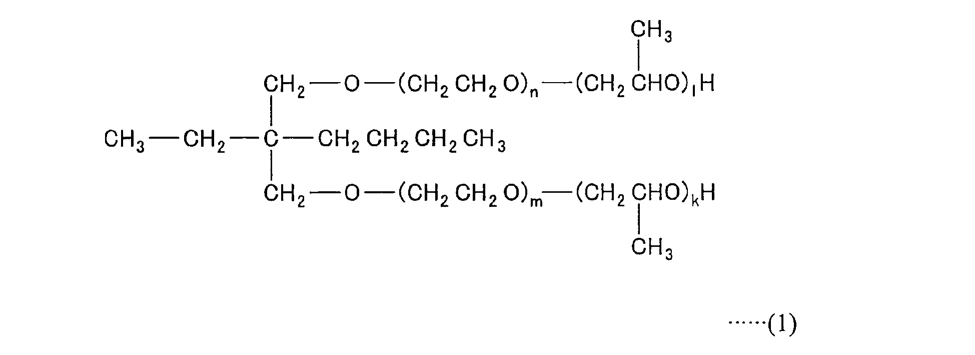 where k+1= 1 ~ 10 and m+n = 2 ~ 30, a product manufactured by NIKKOH CHEMICALS Co. Ltd. under a trade name of NEXCOAT was used, provided, however, that the amounts of addition of propylene oxide and ethylene oxide were changed as described above.

The ink precursor, thus prepared, was heated to 60°C and agitated for four hours. The ink precursor, thus agitated, was forcibly filtered, as the precursor was passed under pressure application through a membrane filter, with a mesh size of 0.8 µm, manufactured by ADVANTEC Inc., for preparing the ink.

### <Sample 2>

In a sample 2, 3 parts by weight of C.I. Direct Yellow 86, as a dye which proves a coloring agent, 76 parts by weight of water, as a solvent, 10 parts by weight of diethylene glycol, as another solvent, 10 parts by weight of glycerin, as a further solvent, and 1 part by weight of a surfactant, containing an organic compound, similar to the compound used in the sample 1, and which is represented by the chemical formula 1, where the amount of addition of ethylene oxide (k+1) was set to 1 and the amount of addition of propylene oxide (m+n) was set to 4, were mixed together to prepare an ink precursor. The ink was prepared in the same way as in sample 1, except using the so prepared ink precursor.

### <Sample 3>

In a sample 3, 2 parts by weight of C.I. Acid Red 52, as a dye which proves a coloring agent, 70 parts by weight of water, as a solvent, 10 parts by weight of triethylene glycol, as another solvent, 5 parts by weight of triethylene monobutyl ether, as a further solvent, 10 parts by weight of glycerin, as a further solvent, and 3 parts by weight of a surfactant, containing an organic compound, similar to the compound used in the sample 1, and which is represented by the chemical formula 1, where the amount of addition of ethylene oxide (k+1) was set to 1 and the amount of addition of propylene oxide (m+n) was set to 5, were mixed together to prepare an ink precursor. The ink was prepared in the same way as in sample 1, except using the so prepared ink precursor.

### <Sample 4>

In a sample 4, 3 parts by weight of C.I. Direct Blue 199, as a dye which proves a coloring agent, 81 parts by weight of water, as a solvent, 5 parts by weight of 1,2-propane diol, as another solvent, 5 parts by weight of diethylene glycol, as a further solvent, 5 parts by weight of 2-pyrrolidone, as a further solvent, and 1 part by weight of a surfactant, containing an organic compound, similar to the compound used in the sample 1, and which is represented by the chemical formula 1, where the amount of addition of ethylene oxide (k+1) was set to 2 and the amount of addition of propylene oxide (m+n) was set to 6, were mixed together to prepare an ink precursor. The ink was prepared in the same way as in sample 1, except using the so prepared ink precursor.

### <Sample 5>

In a sample 5, 4 parts by weight of C.I. Direct Black 154, as a dye which proves a coloring agent, 70.5 parts by weight of water, as a solvent, 5 parts by weight of ethylene glycol, as another solvent, 10 parts by weight of glycerin, as a further solvent, 0.5 part by weight of triethanolamine, as a further solvent, and 5 parts by weight of a surfactant, containing an organic compound, similar to the compound used in the sample 1, and which is represented by the chemical formula 1, where the amount of addition of ethylene oxide (k+1) was set to 4 and the amount of addition of propylene oxide (m+n) was set to 9, were mixed together to prepare an ink precursor. The ink was prepared in the same way as in sample 1, except using the so prepared ink precursor.

### <Sample 6>

In a sample 6, 3 parts by weight of C.I. Direct Blue 87, as a dye which proves a coloring agent, 75.5 parts by weight of water, as a solvent, 5 parts by weight of 1,3-butane diol, as another solvent, 10 parts by weight of triethylene glycol, as a further solvent, 5 parts by weight of glycerin, as a further solvent, 1 part by weight of a surfactant, containing an organic compound, similar to the compound used in sample1, and which is represented by the chemical formula 1, where the amount of addition of ethylene oxide (k+1) was set to 1 and the amount of addition of propylene oxide (m+n) was set to 4, and 0.5 part by weight of a surfactant containing an organic compound represented by the chemical formula 2: 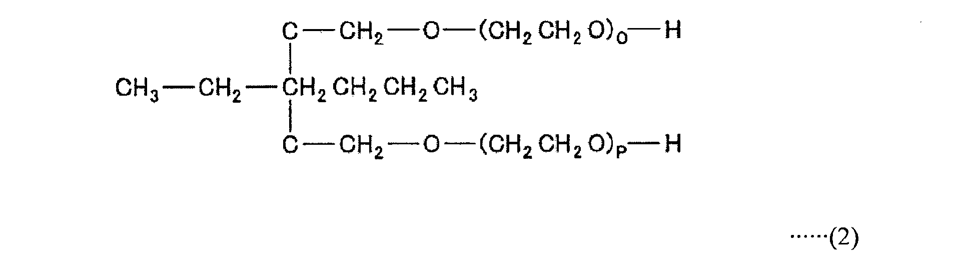 where o+p is an integer not less than two,
were mixed together to prepare an ink precursor. It is noted that the amount of addition of ethylene oxide (o+p) in the above chemical formula 2 was set to 2. The ink was prepared in the same way as in sample 1, except using this ink precursor.

### <Sample 7>

In a sample 7, 5 parts by weight of C.I. Direct Black 168, as a dye which proves a coloring agent, 64.5 parts by weight of water, as a solvent, 10 parts by weight of triethylene glycol, as another solvent, 20 parts by weight of glycerin, as a further solvent, and 0.5 part by weight of a surfactant, containing an organic compound, similar to the compound used in the sample 1, and which is represented by the chemical formula 1, where the amount of addition of ethylene oxide (k+1) was set to 1 and the amount of addition of propylene oxide (m+n) was set to 3, were mixed together to prepare an ink precursor. The ink was prepared in the same way as in sample 1, except using the so prepared ink precursor.

### <Sample 8>

In a sample 8, 4 parts by weight of C.I. Direct Blue 199, as a dye which proves a coloring agent, 65 parts by weight of water, as a solvent, 10 parts by weight of ethylene glycol, as another solvent, 10 parts by weight of diethylene glycol, as a further solvent, 10 parts by weight of triethylene glycol, as a further solvent, and 1 part by weight of polyoxyethylene nonylphenylether, manufactured by NIKKOH CHEMICALS Co. Ltd. under the trade name of NP10, as a surfactant, were mixed together to prepare an ink precursor. The ink was prepared in the same way as in sample 1, except using the so prepared ink precursor.

### <Sample 9>

In a sample 9, 3 parts by weight of C.I. Direct Blue 168, as a dye which proves a coloring agent, 76.9 parts by weight of water, as a solvent, 5 parts by weight of 1,2-propanediol, as another solvent, 5 parts by weight of 2-pyrrolidone, as a further solvent, 10 parts by weight of glycerin, as a further solvent, and 0.1 part by weight of polyoxyethylene nonylphenylether, manufactured by NIKKOH CHEMICALS Co. Ltd. under the trade name of NP7.5, as a surfactant, were mixed together to prepare an ink precursor. The ink was prepared in the same way as in sample 1, except using the so prepared ink precursor.

### <Sample 10>

In a sample 10, 3 parts by weight of C.I. Acid Red 52, as a dye which proves a coloring agent, 71 parts by weight of water, as a solvent, 10 parts by weight of monobutyl triethylene glycol, as another solvent, 5 parts by weight of 2-pyrrolidone, as a further solvent, 10 parts by weight of glycerin, as a further solvent, and 1 part by weight of polyoxyethylene tridecyl alcohol ether, manufactured by NIPPON YUSHI Co. Ltd. under the trade name of DispanolTOC, as a surfactant, were mixed together to prepare an ink precursor. The ink was prepared in the same way as in sample 1, except using the so prepared ink precursor.

### <Sample 11>

In a sample 11, 3 parts by weight of C.I. Direct Yellow 132, as a dye which proves a coloring agent, 74.5 parts by weight of water, as a solvent, 10 parts by weight of diethylene glycol, as another solvent, 10 parts by weight of tetraethylene glycol, as a further solvent, 0.5 part by weight of triethanolamine, as a further solvent, and 2 parts by weight of polyoxyethylene oleyl ether, manufactured by NIPPON YUSHI Co. Ltd. under the trade name of NonionE-215, as a surfactant, were mixed together to prepare an ink precursor. The ink was prepared in the same way as in sample 1, except using the so prepared ink precursor.

### <Sample 12>

In a sample 12, 3 parts by weight of C.I. Acid Red 289, as a dye which proves a coloring agent, 52 parts by weight of water, as a solvent, 10 parts by weight of ethylene glycol, as another solvent, 20 parts by weight of diethylene glycol, as a further solvent, 10 part by weight of glycerin, as a further solvent, and 5 part by weight of polyoxyethylene nonyl phenyl ether, manufactured by NIKKOH CHEMICALS Co. Ltd. under the trade name of NP7.5, as a surfactant, were mixed together to prepare an ink precursor. The ink was prepared in the same way as in sample 1, except using the so prepared ink precursor.

### <Sample 13>

In a sample 13, 4 parts by weight of C.I. Direct Black 154, as a dye which proves a coloring agent, 75.95 parts by weight of water, as a solvent, 5 parts by weight of ethylene glycol, as another solvent, 5 parts by weight of diethylene glycol, as a further solvent, 10 part by weight of glycerin, as a further solvent, and 0.05 part by weight of polyoxyethylene alkyl ether, manufactured by NIKKOH CHEMICALS Co. Ltd. under the trade name of BT9, as a surfactant, were mixed together to prepare an ink precursor. The ink was prepared in the same way as in sample 1, except using the so prepared ink precursor.

Of the inks of the samples 1 to 13, prepared as described above, the surface tension and the viscosity were measured. The surface tension was measured using an automatic surface tensimeter, manufactured by KYOWA KAIMEN KAGAKU-SHA under a trade name of CBVP-Z, whilst the viscosity was measured using a viscometer manufactured by KYOWA KAIMEN KAGAKU-SHA under a trade name of VM-100A.

The measured results of the surface tension and viscosity of the samples 1 to 13 are shown in Table 1 below.

**Table 1**

| | Surface Tension (mN/m) | Viscosity (mPas) |
|---|---|---|
| Sample 1 | 45.4 | 3.66 |
| Sample 2 | 32.9 | 2.14 |
| Sample 3 | 33.2 | 3.23 |
| Sample 4 | 32.2 | 2.01 |
| Sample 5 | 38.0 | 3.46 |
| Sample 6 | 30.6 | 2.55 |
| Sample 7 | 35.7 | 8.9 |
| Sample 8 | 32.1 | 3.48 |
| Sample 9 | 36.3 | 2.50 |
| Sample 10 | 31.5 | 3.03 |
| Sample 11 | 40.5 | 2.92 |
| sample 12 | 31.2 | 6.55 |
| Sample 13 | 47.3 | 2.33 |

It is seen from the results shown in Table 1 that, with the samples 1 to 13, the values of surface tension are in a range between 30 mN/m and 47 mN/m, while those of the viscosity are in a range between 2 mPas and 9 mPas, there being no marked difference among the values of the surface tension and among the values of the viscosity.

Using an ink jet printer, with a nozzle diameter of 20µm and a resistance value of the heating resistors of 135Ω, having a head chip with 24 nozzles, printing of alphabetical letters and all-over printing were carried out on PPC paper sheets manufactured by XEROX Inc., regenerated paper sheets, manufactured by HONSHUU SEISHI C.Ltd., and on bond paper sheets, manufactured by MEAD Inc., by driving the head chip with a driving voltage of 11V, and evaluation was made of the quality of printed letters, ink fixing performance and frequency response. The all-over printing was carried out by daubing preset areas of the printing paper sheets used.

The results of evaluation of the quality of printed letters, ink fixing performance and frequency response of the samples 1 to 13 are indicated in the Table 2 below.

**Table 2**

| | Evaluation of Printing Quality | Evaluation of Ink Fixing | Evaluation of Frequency Response | | |
|---|---|---|---|---|---|
| | | | 1 kHz | 3 kHz | 10 kHz |
| Sample 1 | ○ | ○ | Ⓞ | Ⓞ | ○ |
| Sample 2 | ○ | Ⓞ | Ⓞ | Ⓞ | Ⓞ |
| Sample 3 | ○ | Ⓞ | Ⓞ | Ⓞ | Ⓞ |
| Sample 4 | ○ | Ⓞ | Ⓞ | Ⓞ | Ⓞ |
| Sample 5 | ○ | ○ | Ⓞ | Ⓞ | ○ |
| Sample 6 | ○ | Ⓞ | Ⓞ | Ⓞ | Ⓞ |
| Sample 7 | ○ | ○ | Ⓞ | ○ | ○ |
| Sample 8 | Δ | Δ | Δ | × | × |
| Sample 9 | Δ | Δ | Δ | × | × |
| Sample 10 | × | Δ | × | × | × |
| Sample 11 | × | × | × | × | × |
| Sample 12 | × | ○ | Δ | × | × |
| Sample 13 | × | × | Δ | × | × |

The printing quality for alphabetical letters was evaluated by visually inspecting the letters printed on the above three sorts of paper sheets. In the above Table 2, a symbol ○ indicates that no bleeding is observed in the evaluation of the quality of printed letters. A symbol Δ indicates that, while bleeding is observed, letters can be recognized. A symbol × indicates that bleeding is so severe that printed letters are hardly recognizable.

The ink fixing was evaluated by scrubbing the letters, printed on the PPC paper sheets, manufactured by XEROX Inc., with an emery paper sheet manufactured by TOYO KAGAKU SANGYO-SHA (trade name: No.5C). For evaluation, the scrubbed part was visually checked as to whether or not the printed letters were blurred.

As for evaluation of ink fixing in Table 2, a mark Ⓞ indicates that blurring occurred in five seconds, a mark ○ indicates that blurring occurred in ten seconds, a mark Δ indicates that blurring occurred in fifteen seconds, and a mark × indicates that blurring occurred in thirty seconds. As for evaluation of frequency response, letter printing and all-over printing were carried out on the above three sorts of the printing paper sheets, with the frequency of the driving voltage set to 1 kHz, 3 kHz and 10 kHz, and the possible presence of blurred zones or unprinted zones where no ink liquid droplet i was deposited (so-called open zones) was checked for evaluation.

In the evaluation of frequency response in Table 2, a mark Ⓞ indicates that there are observed blurring or open spots in neither the letter printing nor all-over printing, a mark ○ indicates that blurring is observed in only the all-over printing, a mark Δ indicates that blurring and open spots are seen in only all-over printing, and a mark × indicates that blurring and open spots are seen in both the letter printing and all-over printing.

If the head chip is supplied with the driving voltage of the frequency of 1 kHz, the head chip is driven at an ink emitting interval such that ink liquid droplets are emitted at a rate of say 1000 times per second. If the head chip is supplied with the driving voltage of the frequency of 3 kHz or with the driving voltage of the frequency of 10 kHz, the head chip is driven at an ink emitting interval such that ink liquid droplets are emitted at a rate of say 3000 times per second or at an ink emitting interval such that ink liquid droplets are emitted at a rate of say 10000 times per second, respectively.

It is seen from the results of evaluation shown in Table 2 that, as compared to the samples 8 to 13 not containing surfactants containing organic compound shown by the chemical formula 1, the samples 1 to 7 are not different significantly as to surface tension or viscosity, while being superior to the samples 8 to 13 as to the quality of printed letters, ink fixing and frequency response.

The samples 1 to 7, each containing surfactant at least containing organic compounds represented by the chemical formula 1, exhibit the high degree of wettability with respect to respective paper sheets, such as PPC paper sheets, regenerated paper sheets or bond paper sheets. That is, the inks of these samples are penetrated quickly in the direction along the thickness of the recording paper sheet to present an appearance as if the ink has been dried. Consequently, with the samples 1 to 7, high-quality letter printing or all-over printing free of bleeding or blurring may be achieved.

Moreover, the samples 1 to 7 exhibit superior wettability not only for recording paper sheets but also for the head chip, such that the ink may be supplied promptly on the heating resistor the instant the ink liquid droplet i is emitted from the nozzle. Hence, the ink liquid droplet i may properly be emitted from the nozzle, each time the ink liquid droplet is to be emitted, even if the emission interval is reduced, with the result that high-quality letter printing or all-over printing may be achieved in a manner free from blurring or open spots.

The samples 8 to 13, not containing the surfactant having an organic compound shown by the chemical formula 1, are inferior to the samples 1 to 7 in wettability with respect to the recording paper sheet P. Thus, the ink liquid droplet on deposition on the recording paper sheet is not dried quickly, and is susceptible to bleeding or blurring, thereby lowering the printing quality.

On the other hand, the samples 8 to 13 are inferior to the samples 1 to 7 as to wettability with respect to the head chip, such that the ink cannot be delivered quickly to the heating resistor after emitting the ink liquid droplet i from the nozzle. Thus, with these samples 8 to 13, the shorter the interval for ink emission, that is, the higher the frequency of the driving voltage, the more difficult it becomes to emit the ink liquid droplet from the nozzle, each time the ink liquid droplet is to be emitted from the nozzle. Hence, blurred or open spots are produced to lower the printing quality.

It is seen from above that, for preparing the ink with high printing quality as well as excellent ink fixing properties and frequency response, it is crucial that the surfactant, at least containing the organic compound having the chemical formula 1, shall be contained in the ink.

The present invention is not limited to the embodiments explained above with reference to the drawings and a variety of changes or substitutions by equivalents may be attempted by those skilled in the art without departing from the scope of the invention as defined in the appended claims.

## Claims

1. A recording liquid deposited on a support as liquid droplets for performing recording thereon, wherein
the recording liquid contains a dyestuff, a solvent for dispersing said dyestuff and a surfactant containing an organic compound represented by the chemical formula (1): 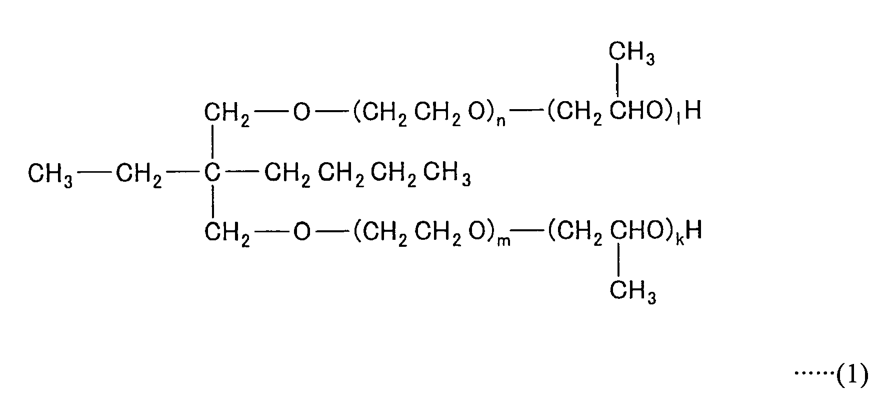 where k+1 = 1 ~ 10 and m+n = 2 ~ 30.

2. The recording liquid according to claim 1 wherein said surfactant is contained in an amount not lower than 0.05 wt% and not higher than 10 wt%.

3. A liquid cartridge mounted to a liquid supplying device provided to a liquid emitting apparatus configured for emitting a recording liquid contained in a liquid vessel in the form of liquid droplets for depositing the so emitted liquid droplets on a support to effect recording, said liquid cartridge operating as a supply source for said recording liquid for said liquid supplying device, wherein
said recording liquid contains a dyestuff, a solvent for dispersing said dyestuff and an organic compound represented by the chemical formula (1): 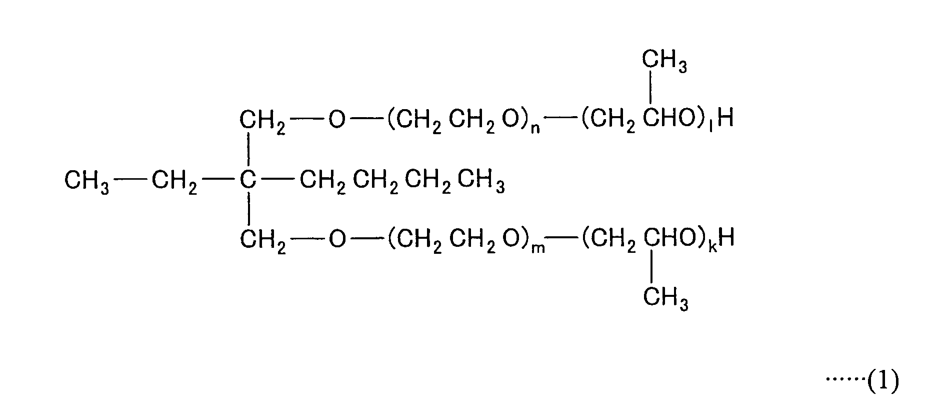 where k+1 = 1 ~ 10 and m+n = 2 ~ 30.

4. The liquid cartridge according to claim 3 wherein said surfactant is contained in an amount not lower than 0.05 wt% and not higher than 10 wt%.

5. The liquid cartridge according to claim 3 wherein said liquid vessel includes a liquid container for accommodating said recording liquid, a connecting unit which, when the liquid vessel is mounted on said liquid supply apparatus, connects said recording liquid accommodated in said liquid container to said liquid supply apparatus so that said recording liquid may be supplied to said liquid supply apparatus, an opening for communication with outside which, when the liquid vessel is mounted on said liquid supply apparatus, takes in air from outside in an amount equivalent to a decreased amount of the recording liquid in said liquid container brought about by the supply of said recording liquid from said liquid container to said liquid supply apparatus, an air inlet duct for providing for communication between said liquid container and said opening for communication with outside for introducing air taken in from said opening for communication with outside into said liquid container, and a reservoir arranged between said opening for communication with outside and said air inlet duct for storage of said recording liquid flowing out from said liquid container.

6. A liquid emitting apparatus comprising emitting means including a liquid chamber for storage of a recording liquid therein, a supply unit for supplying said recording liquid to said liquid chamber, at least one pressure generating device provided in said liquid chamber for pressurizing said recording liquid stored in said liquid chamber, and an emitting port for emitting said recording liquid, pressurized by said pressure generating device, onto the major surface of a support, from said liquid chamber in the form of liquid droplets, and a liquid cartridge connected to said emitting means and operating as a supply source of said recording liquid to said supply unit;
said recording liquid containing a dyestuff, a solvent for dispersing said dyestuff and a surfactant containing an organic compound represented by the chemical formula (1): 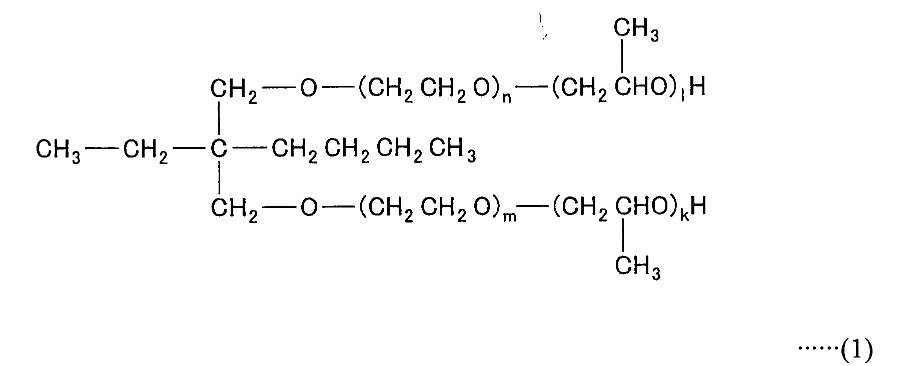 where k+1 = 1 ~ 10 and m+n = 2 ~ 30.

7. The liquid emitting apparatus according to claim 6 wherein said surfactant is contained in said recording liquid in an amount not lower than 0.05 wt% and not higher than 10 wt%.

8. The liquid emitting apparatus according to claim 6 wherein a plurality of said pressure generating devices are provided in said liquid chamber of said emitting means to control the driving of each pressure generating device, there being provided emission control means for controlling the angle of emission of said liquid droplets via said emission port.

9. The liquid emitting apparatus according to claim 6 wherein said emission ports of said emission means are arranged side-by-side substantially on a straight line.

10. A method for emitting a liquid by a liquid emitting apparatus comprising emitting means including a liquid chamber for storage of a recording liquid therein, a supply unit for supplying said recording liquid to said liquid chamber, at least one pressure generating device provided in said liquid chamber for pressurizing said recording liquid stored in said liquid chamber, and an emitting port for emitting said recording liquid, pressurized by said pressure generating device, onto the major surface of a support, from said liquid chamber in the form of liquid droplets, and a liquid cartridge connected to said emitting means and operating as a supply source of said recording liquid to said supply unit; said method comprising
employing, as said recording liquid, a liquid mixture composed of a dyestuff, a solvent for dispersing said dyestuff, and a surfactant containing an organic compound represented by the chemical formula 1: 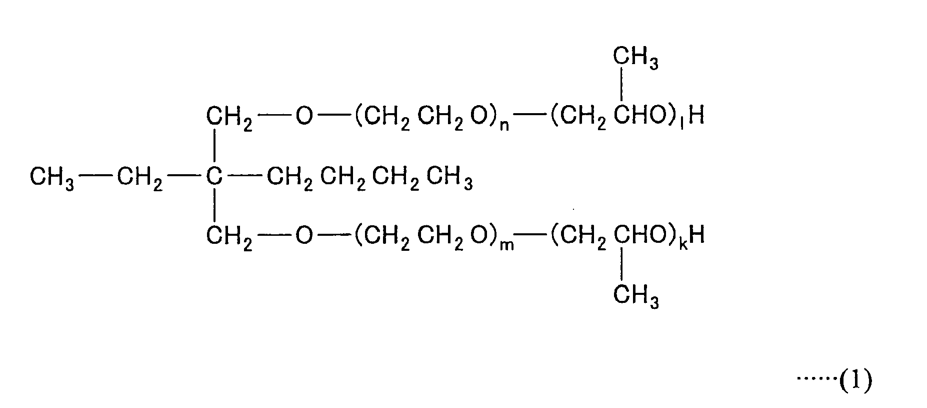 where k+1= 1 ~ 10 and m+n = 2 ~ 30.

11. The liquid emitting method according to claim 10 wherein said surfactant is contained in an amount not lower than 0.05 wt% and not higher than 10 wt%. based on the total content of said recording liquid

12. The liquid emitting method according to claim 10 wherein a plurality of said pressure generating devices are provided in said liquid chamber of said emitting means and wherein the angle of emission of said liquid droplets via said emission port is controlled by emission control means controlling the driving of each pressure generating device.

13. The liquid emitting method according to claim 10 wherein said emission ports of said emission means are arranged side-by-side substantially on a straight line.
